# EUROPÄISCHE PATENTSCHRIFT

(11) **EP 0 625 261 B1**
(45) Veröffentlichungstag und Bekanntmachung des Hinweises auf die Patenterteilung: **12.06.1996**
(21) Anmeldenummer: 93902066.5
(22) Anmeldetag: 01.02.1993
(51) Int. Cl.: G01M 11/00, G02B 6/38

(54) **MESSEINRICHTUNGEN FÜR MEHRERE LICHTWELLENLEITER UND VERFAHREN ZUR DURCHFÜHRUNG DER MESSUNG**
TEST DEVICES FOR SEVERAL OPTICAL WAVEGUIDES, AND METHOD OF CARRYING OUT THE TEST
DISPOSITIFS DE MESURE POUR PLUSIEURS GUIDES D'ONDES LUMINEUSES ET PROCEDE D'EXECUTION DE LA MESURE

(30) Priorität: 05.02.1992 DE 4203259; 21.12.1992 DE 4243388
(43) Veröffentlichungstag der Anmeldung: 23.11.1994
(73) Patentinhaber: SIEMENS AKTIENGESELLSCHAFT, D-80333 München (DE)
(72) Erfinder: LIEBER, Winfried, D-77654 Offenburg (DE); WARTMANN, Thomas, D-81475 München (DE)
(86) Internationale Anmeldenummer: DE9300077
(87) Internationale Veröffentlichungsnummer: WO9316363

(56) Entgegenhaltungen:
- EP-A- 0 411 956
- DE-A- 3 624 653
- FR-A- 2 602 594
- GB-A- 2 157 846
- JP-A- 2 234 043
- PATENT ABSTRACTS OF JAPAN vol. 7, no. 42 (P-177)(1187) 19. Februar 1983 & JP-A-57 192 911
- PATENT ABSTRACTS OF JAPAN vol. 13, no. 583 (P-981)(3931) 22. Dezember 1989 & JP-A-01 246 512
- PATENT ABSTRACTS OF JAPAN vol. 8, no. 38 (P-255)(1475) 18. Februar 1984 & JP-A-58 191 947
- PATENT ABSTRACTS OF JAPAN vol. 11, no. 299 (P-621)(2746) 29. September 1987 & JP-A-62 091 832
- AT & T TECHNICAL JOURNAL Bd. 66, Nr. 1, Januar 1987, NEW YORK US Seiten 45 - 64 J.M. ANDERSON U.A. 'LIGHTWAVE SPLICING AND CONNECTOR TECHNOLOGY'
- Electronics Test, vol.29, no.13, June 1981, pages 32,33

## Beschreibung

Die Erfindung betrifft Meßeinrichtungen für mehrere Lichtwellenleiter und ein entsprechendes Verfahren Ansprüche 1, 54-56.

Aus der DE-C2-34 29 947 ist eine Meßeinrichtung bekannt, die die Beurteilung einer Spleißstelle eines einzelnen Lichtwellenleiters erlaubt. Vor der Spleißstelle wird ein Sendesignal mit Hilfe einer Koppeleinrichtung in den Lichtwellenleiter eingespeist und nach der Spleißstelle auf der Empfangsseite mittels einer zweiten Koppeleinrichtung ausgekoppelt. Das Austrittsfeld des ausgekoppelten Sendesignals wird von einer Fotodiode empfangen und anschließend angezeigt.

Würde man mehrere Lichtwellenleiter in diese bekannte Meßeinrichtung einlegen, so würde nur die gemeinsame, überlagerte Summe der einzelnen Strahlungsfelder der Lichtwellenleiter gemessen werden können. Aus dieser Superpositions-Summe wären Rückschlüsse auf die selektiven, charakteristischen Einzel-Strahlungsfelder der eingelegten Lichtwellenleiter nicht möglich, da eine funktionale Abhängigkeit zwischen den selektiven Meßgrößen und der überlagerten Summe nicht ableitbar ist. Eine Individualaussage z.B. zur Spleißdämpfung eines speziellen Lichtwellenleiters innerhalb einer Meßeinrichtung nach dem Stand der Technik ist nicht möglich.

Aus der DE-A1-39 11 429 ist eine Vorrichtung zur Ausrichtung zweier Faserenden von Lichtwellenleitern in einer Spleißstelle bekannt. Durch eine Beleuchtung der beiden Faserenden eines einzigen Lichtwellenleiters von außen werden Schattenbilder der beiden Lichtwellenleiterenden erzeugt. Diese beiden Schattenbilder werden von mindestens zwei feststehenden, getrennten fotoempfindlichen Flächen, die entlang der Längsachse des Lichtwellenleiters angeordnet sind, empfangen. Aus den durch die fotoempfindlichen Flächen erzeugten, getrennten elektrischen Meßsignalen wird durch Vergleich eine Stellgröße für eine Positioniereinrichtung zur fluchtenden Ausrichtung der Faserenden abgeleitet. Aussagen zu charakteristischen, das Übertragungsverhalten des Lichtwellenleiters beschreibenden Kenngrößen sind mit einer solchen Einrichtung nicht möglich. Insbesondere läßt sich damit keine Spleißdämpfungsmessung durchführen.

Mehrere Lichtwellenleiter werden bekannterweise zeitlich nacheinander mit einem einzigen, gemeinsamen lichtempfindlichen Element gemessen beispielsweise EP-A2-411 956.

Der Erfindung liegt die Aufgabe zugrunde, eine Meßeinrichtung aufzuzeigen, mit deren Hilfe die das Übertragungsverhalten wiedergebenden Kenngrößen mehrerer Lichtwellenleiter und/oder deren örtliche Lage selektiv in einfacher und zuverlässiger Weise gemessen werden können.

Gemäß der Erfindung erfolgt die Lösung dieser Aufgabe mit einer Meßeinrichtung für mehrere Lichtwellenleiter mit einem optischen Empfänger, der eine Koppeleinrichtung aufweist, die derart ausgebildet ist, daß mindestens zwei Lichtwellenleiter in einer geordneten Struktur so nebeneinander einlegbar sind, daß sie eigenständige, nebeneinander liegende Strahlungsfelder aufweisen, wobei in diesen Strahlungsfeldern auszukoppelnder Sendesignale oder in einer Gruppe dieser Strahlungsfelder jeweils mindestens ein lichtempfindliches Element vorgesehen ist, wobei diese mindestens zwei lichtempfindlichen Elemente bezüglich ihrer Empfangscharakteristika derart angeordnet und ausgerichtet sind, daß sie unterschiedliche Teile der genannten Strahlungsfelder erfassen, und mit einer dem optischen Empfänger zugeordneten Auswerteeinrichtung, in der die von den einzelnen lichtempfindlichen Elementen aufgenommenen Meßsignale der einzelnen Strahlungsfelder getrennt auswertbar sind.

Die Erfindung verbessert die Möglichkeiten zur selektiven Auswertung der empfangenen Strahlungsfelder mehrerer Lichtwellenleiter bezüglich ihrer selektiven optischen Übertragungs-Kenngrößen und/oder örtlichen Lage. Der dazu notwendige Mehraufwand, d.h., der Einsatz mehrerer lichtempfindlicher Elemente, bleibt demgegenüber vernachlässigbar. Ein Vorteil einer Meßeinrichtung gemäß der Erfindung besteht vor allem darin, daß man bereits mit einem einzigen Meßvorgang ein Mehr an Meßinformation für jeden einzelnen Lichtwellenleiter oder für eine Gruppe von interessierenden Lichtwellenleitern gewinnt.

Während mit der bekannten Meßeinrichtung mit nur einem einzigen lichtempfindlichen Element für n Lichtwellenleiter n Einzelmessungen sukzessive auszuführen wären, um die individuellen optischen Übertragungs-Kenngrößen zu erhalten, ist bei der Erfindung nur noch ein einziger Meßvorgang erforderlich. Dadurch reduziert sich der Arbeitsaufwand für die selektive Messung der optischen Übertragungs-Kenngrößen (zum Beispiel die Dämpfung der Lichtwellenleiter oder die Spleißdämpfung an einer Verbindungsstelle) pro Lichtwellenleiter in erheblichem Umfang bei gleichzeitiger Verkürzung der Meßzeit.

Als empfangsseitige Koppeleinrichtung kann bevorzugt ein Biegekoppler eingesetzt werden. Es ist aber in manchen Fällen auch zweckmäßig, andere Koppeleinrichtungen vorzusehen. So kann z.B. auch endseitig (d.h. am stirnseitigen Ende) der Lichtwellenleiter Licht ausgekoppelt werden. Dies ist insbesondere bei Strecken-Dämpfungsmessungen zweckmäßig, wo die Enden der Lichtwellenleiter zugänglich sind.

Ist gemäß einer zweckmäßigen Weiterbildung der Erfindung bei mehr als zwei Lichtwellenleitern in der Meßeinrichtung die Anzahl der lichtempfindlichen Elemente kleiner als die Anzahl der zu untersuchenden Lichtwellenleiter, so können die charakteristischen, optischen Übertragungs-Kenngrößen jedes einzelnen Lichtwellenleiters gegenüber dem Stand der Technik selektiv verbessert mit einer größeren Ortsauflösung bestimmt werden.

Die optischen Übertragungs-Kenngrößen können für jeden Lichtwellenleiter selektiv besonders exakt gemessen werden, wenn in einer weiteren zweckmäßigen Weiterbildung die Anzahl der lichtempfindlichen Elemente gleich der Anzahl der zu untersuchenden Lichtwellenleiter gewählt ist.

Ist gemäß einer anderen vorteilhaften Ausgestaltung der Erfindung schließlich die Anzahl der lichtempfindlichen Elemente größer als die Anzahl der interessierenden Lichtwellenleiter gewählt, so sind die optischen Übertragungs-Kenngrößen selektiv exakt mit weiter verbesserter Ortsauflösung gegenüber den anderen beiden genannten Fällen ermittelbar, wobei eine eindeutige Zuordnung zwischen den Lichtwellenleitern und den lichtempfindlichen Elementen nicht erforderlich ist.

In allen drei aufgeführten Weiterbildungen der Erfindung ist es auch möglich, nicht alle vorhandenen Lichtwellenleiter, sondern nur bestimmte Gruppen von interessierenden Lichtwellenleitern, wie z.B. einzelne Lichtwellenleiter-Bändchen, gleichzeitig und selektiv bezüglich ihrer individuellen optischen Übertragungs-Kenngrößen zu vermessen.

Gemäß einer zusätzlichen zweckmäßigen Weiterbildung der Erfindung können die selektiven optischen Übertragungs-Kenngrößen der Lichtwellenleiter sogar eines Lichtwellenleiter-Bändchens mit Hilfe einer erfindungsgemäßen Einrichtung selektiv gemessen werden, ohne die Lichtwellenleiter jeweils aus der Bändchenstruktur herauslösen und vermessen zu müssen. Ein derartiges Herauslösen ist im allgemeinen auch kaum möglich.

Die Erfindung betrifft auch ein Meßverfahren, wobei mindestens zwei Lichtwellenleiter in eine Koppeleinrichtung eines optischen Empfängers in einer geordneten Struktur so nebeneinander eingelegt werden, daß eigenständige, nebeneinanderliegende Strahlungsfelder gebildet werden, wobei in diesen Strahlungsfeldern auszukoppelnder Sendesignale oder in einer Gruppe dieser Strahlungsfelder jeweils mindestens ein lichtempfindliches Element vorgesehen wird, wobei diese mindestens zwei lichtempfindlichen Elemente bezüglich ihrer Empfangscharakteristika gegenüber den Strahlungsfeldern derart ausgerichtet werden, daß von diesen mindestens zwei lichtempfindlichen Elementen unterschiedliche Teile der genannten Strahlungsfelder erfaßt werden, und wobei von den lichtempfindlichen Elementen selektive Meßsignale, die den jeweiligen Strahlungsfeldern entsprechen, empfangen und anschließend getrennt ausgewertet werden.

Die Erfindung betrifft weiterhin auch eine Meßeinrichtung für mehrere Lichtwellenleiter, mit einem optischen Empfänger, der eine Koppeleinrichtung aufweist, die derart ausgebildet ist, daß mindestens zwei Lichtwellenleiter in einer geordneten Struktur so nebeneinander einlegbar sind, daß sie eigenständige, nebeneinander liegende Strahlungsfelder aufweisen, wobei der optische Empfänger derart ausgebildet ist, daß in diesen Strahlungsfeldern auszukoppelnder Sendesignale oder in einer Gruppe dieser Strahlungsfelder jeweils mindestens ein lichtempfindliches Element relativ gegenüber den zu messenden Lichtwellenleitern quer zur Ausbreitungsrichtung der Strahlungsfelder verschiebbar angeordnet ist, und mit einer dem optischen Empfänger zugeordneten Auswerteeinrichtung, in der die von dem lichtempfindlichen Element aufgenommenen Meßsignale der einzelnen Strahlungsfelder getrennt auswertbar sind.

Die Erfindung betrifft darüber hinaus noch eine Meßeinrichtung für mehrere Lichtwellenleiter, mit einem optischen Empfänger, der eine Koppeleinrichtung aufweist, die derart ausgebildet ist, daß mindestens zwei Lichtwellenleiter in einer geordneten Struktur so nebeneinander einlegbar sind, daß sie eigenständige, nebeneinander liegende Strahlungsfelder aufweisen, wobei der optische Empfänger derart ausgebildet ist, daß dessen Koppeleinrichtung mit den zu messenden Lichtwellenleitern relativ gegenüber mindestens einem lichtempfindlichen Element quer zur Ausbreitungsrichtung der Strahlungsfelder verschiebbar angeordnet ist, so daß diesen Strahlungsfeldern auszukoppelnder Sendesignale oder einer Gruppe dieser Strahlungsfelder jeweils mindestens ein lichtempfindliches Element zugeordnet ist und mit einer dem optischen Empfänger zugeordneten Auswerteeinrichtung in der die von dem lichtempfindlichen Element aufgenommenen Meßsignale der einzelnen Strahlungsfelder getrennt auswertbar sind.

Sonstige Weiterbildungen der Erfindung sind in Unteransprüchen wiedergegeben.

Die Erfindung und ihre Weiterbildungen werden nachfolgend anhand von Zeichnungen näher erläutert. Es zeigen:
- Figur 1: in schematischer Darstellung den grundsätzlichen Gesamtaufbau einer erfindungsgemäßen Meßeinrichtung mit zwei Lichtwellenleitern und zwei lichtempfindlichen Elementen,
- Figur 2: schematisch die Empfangsverhältnisse des optischen Empfängers nach Figur 1 mit zwei Strahlungsfeldern und zwei lichtempfindlichen Elementen,
- Figur 3: in schematischer Darstellung einen optischen Empfänger gemäß der Erfindung mit vier Lichtwellenleitern und zwei lichtempfindlichen Elementen,
- Figur 4: schematisch die Empfangsverhältnisse des optischen Empfängers nach Figur 3 mit zwei lichtempfindlichen Elementen,
- Figur 5: in schematischer Darstellung eine Abwandlung der Empfangsverhältnisse nach Figur 4,
- Figur 6: in schematischer Darstellung ein zweites Ausführungsbeispiel der erfindungsgemäßen Meßeinrichtung mit vier Lichtwellenleitern und vier lichtempfindlichen Elementen,
- Figur 7: in vergrößerter, räumlicher Darstellung vier lichtempfingliche Elemente nach Figur 6 mit drei dazwischenliegenden Blenden,
- Figur 8: in schematischer Darstellung die Empfangsverhältnisse von vier Strahlungsfeldern zusammen mit vier lichtempfindlichen Elementen nach Figur 6 und drei dazwischenliegenden Blenden nach Figur 7,
- Figur 9: in schematischer Darstellung ein drittes Ausführungsbeispiel der erfindungsgemäßen Meßeinrichtung mit vier Lichtwellenleitern und acht lichtempfindlichen Elementen.
- Figur 10: in schematischer Darstellung die Meßeinrichtung nach Figur 6 mit 4 Lichtwellenleitern und 4 lichtempfindlichen Elementen mit dazwischen angeordneten Entkopplungs-Mitteln,
- Figur 11: in schematischer Darstellung Empfangsverhältnisse bei einer Meßzeile mit 4 lichtempfindlichen Elementen nach Figur 10,
- Figur 12: in schematischer Darstellung Empfangsverhältnisse bei einer zu Figur 11 abgewandelten Meßzeile,
- Figur 13: in schematischer Darstellung ein Ausführungsbeispiel zum verbesserten Entkoppeln benachbarter Strahlungsfelder mit Hilfe optischer Abbildungsmittel in einer Auskoppelebene der Meßeinrichtung nach Figur 10 und
- Figur 14: in schematischer Darstellung die optischen Abbildungsmittel in einer Ansicht senkrecht zur Zeichenebene von Figur 13.

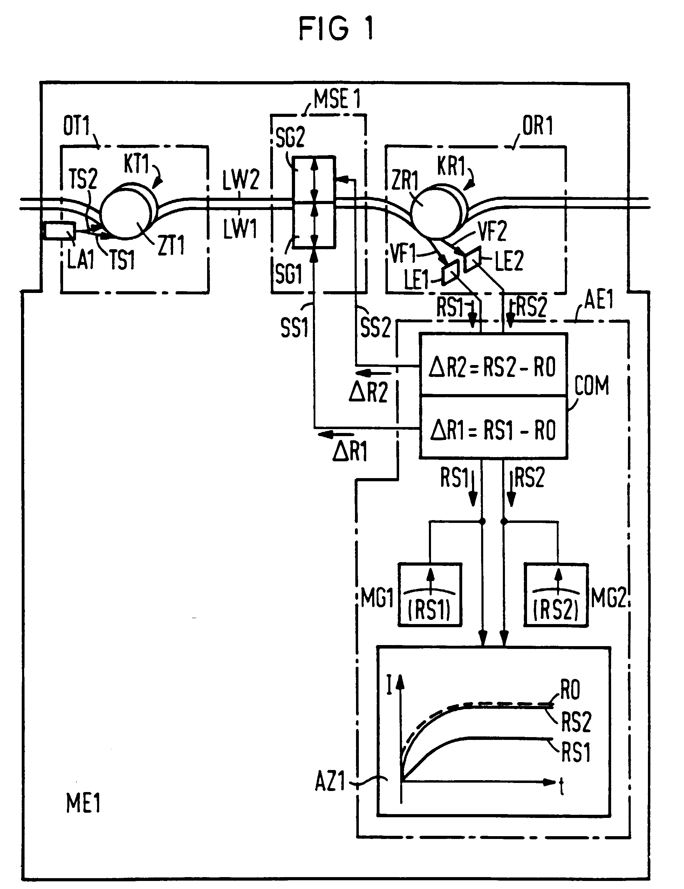

In der Figur 1 ist eine erfindungsgemäße Meßeinrichtung ME1 dargestellt, bestehend aus den Komponenten eines optischen Senders OT1, einer Spleißeinrichtung MSE1, eines optischen Empfängers OR1 und einer Auswerteeinrichtung AE1. Diese Komponenten sind zweckmäßig zu einem Meßgerät ME1, zum Beispiel in Form eines Meßkoffers, zusammengefaßt oder sind z.B. Bestandteil eines Lichtwellenleiter-Spleißgerätes oder eines Dämpfungsmeßgerätes. Die nachfolgenden Ausführungsbeispiele beziehen sich sämtlich auf die Spleißdämpfung von Lichtwellenleitern. Neben diesem besonders vorteilhaften Anwendungsgebiet der Erfindung besteht aber auch die Möglichkeit, die Erfindung zur Messung weiterer optischer Übertragungs-Kenngrößen, zum Beispiel für Phasenlaufzeiten, Impulsantworten, Streckendämpfung usw. einzusetzen.

Zwei zu spleißende Lichtwellenleiter LW1 und LW2 sind nebeneinander in die Meßeinrichtung ME1 eingelegt. Im optischen Sender OT1 von Figur 1 wird mittels einer Lichtquelle LA1 Licht über eine Koppeleinrichtung KT1 in die beiden Lichtwellenleiter LW1 und LW2 eingekoppelt. Der optische Sender OT1 weist entweder nur eine einzige Lichtquelle, an die alle zu messenden Lichtwellenleiter LW1, LW2 gemeinsam angekoppelt sind, oder für jeden anzukoppelnden Lichtwellenleiter LW1, LW2 eine eigene Lichtquelle auf. Die beiden Sendesignale TS1 für den Lichtwellenleiter LW1 und TS2 für den Lichtwellenleiter LW2 sind symbolisch durch jeweils einen Pfeil angedeutet. Für die folgenden Ausführungen zu Figur 1 sei angenommen, daß das optische Sendesignal TS2 genauso groß ist wie das Sendesignal TS1, d.h. daß beide eingekoppelten Signalpegel gleich sind.

Die Einkopplung erfolgt nach dem Biegekopplerprinzip, d.h., die Lichtwellenleiter sind um einen Zylinder ZT1 herumgelegt und das Lichtsignal TS1 tritt tangential in den Lichtwellenleiter LW1 und das Lichtsignal TS2 tangential in den Lichtwellenleiter LW2 ein. Alternativ zum Biegekopplerprinzip können die Sendesignale TS1 und TS2 auch direkt über die offenen Stirnseiten der Lichtwellenleiter LW1 und LW2 eingespeist werden. Sie können vorteilhaft wie in Figur 1 aus einem eigens vorgesehenen Meßsender, wie z.B. der Lichtwelle LA1 stammen, aber auch Nachrichtensignale aus den Lichtwelllenleitern LW1 und LW2 sein. Die beiden optischen Sendesignale TS1 und TS2 laufen durch die beiden Lichtwellenleiter LW1 und LW2 über die Mehrfachspleißstelle MSE1 zur Empfangsseite.

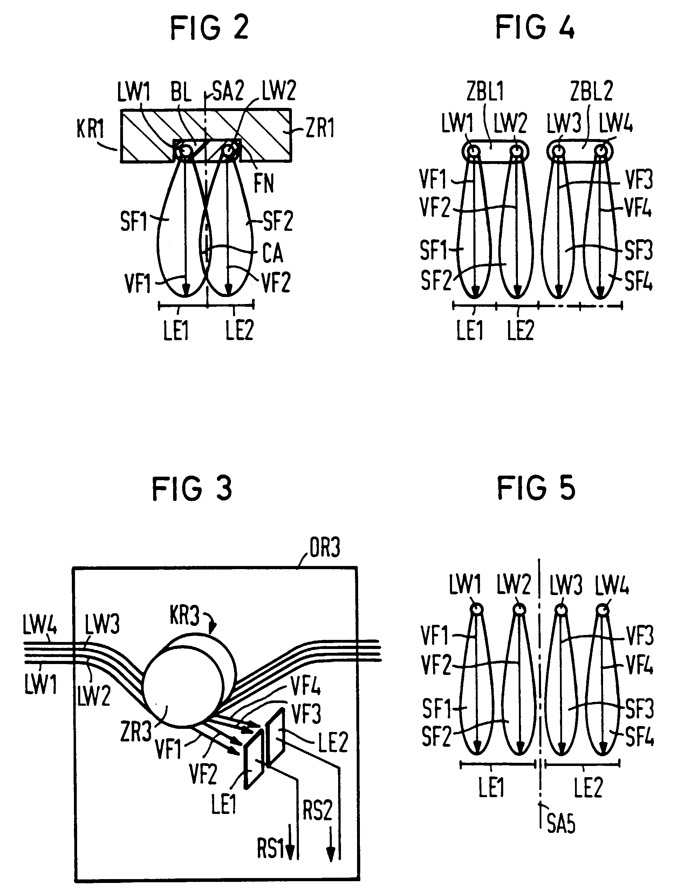

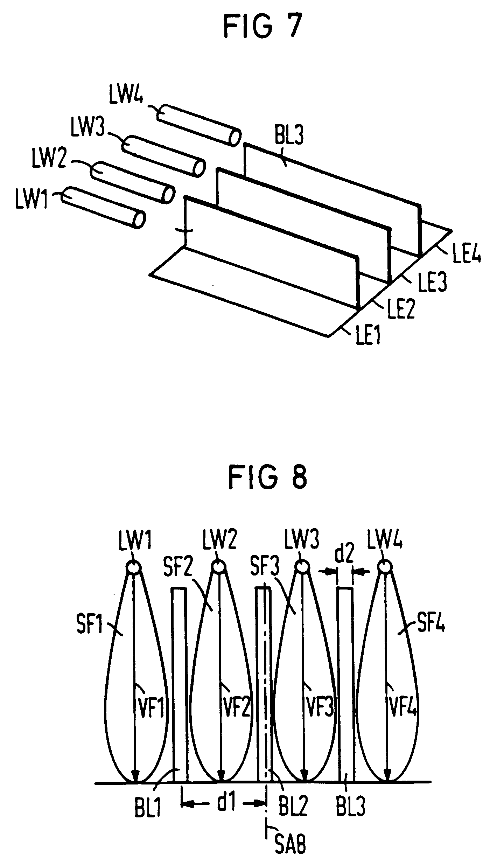

Ein Anteil von ihnen wird dort von einem optischen Empfänger OR1 mittels einer zweiten Koppeleinrichtung KR1 vorzugsweise z.B. nach dem Biegekopplerprinzip in etwa tangentialer Richtung ausgekoppelt. Hierzu sind die Lichtwellenleiter LW1, LW2 um einen Zylinder ZR1 analog zur Sendeseite herumgelegt. Um für die beiden Sendesignale TS1 und TS2 zwei getrennte zugehörige Empfangssignale RS1 und RS2 selektiv zu erhalten, werden die Lichtwellenleiter LW1 und LW2 auf der Empfangsseite derart um den Zylinder ZR1 der Koppeleinrichtung KR1 gelegt, daß zwei unabhängige, eigenständig nebeneinander liegende Strahlungsfelder SF1 für das Sendesignal TS1 und SF2 für das Sendesignal TS2, wie in Figur 2 veranschaulicht, resultieren. Die Hauptabstrahlungsrichtungen der Strahlungsfelder SF1 und SF2 sind in den Figuren 1 und 2 durch Betrag und Richtung der jeweils zugehörigen Strahlungsvektoren VF1 und VF2 gekennzeichnet. Die beiden Strahlungsfelder SF1 und SF2 sind von zwei lichtempfindlichen Elementen, LE1 für das Strahlungsfeld SF1 und von LE2 für das Strahlungsfeld SF2, zumindest teilweise selektiv erfaßbar. Die Strahlungsfelder SF1 und SF2 werden in den lichtempfindlichen Elementen LE1 und LE2 in elektrische Meßsignale RS1 und RS2 umgewandelt und jeweils getrennt über zwei Leitungen einer gemeinsamen Auswerteeinrichtung AE1 zugeführt. Die beiden lichtempfindlichen Elemente LE1 und LE2 werden symmetrisch zur Symmetrieebene SA2 der Strahlungsfelder SF1 und SF2, wie in Figur 2 dargestellt, angeordnet. Zwar nimmt das lichtempfindliche Element LE1 auch einen Teil der Strahlung des Lichtwellenleiters LW2 auf und umgekehrt das lichtempfindliche Element LE2 einen Teil der Strahlung des Lichtwellenleiters LW1. Bei symmetrischer Anordnung der lichtempfindlichen Elemente LE1 und LE2 bezüglich der Symmetrieebene SA2 und gleichen Strahlungsfeldern SF1 und SF2 können aber gegebenenfalls durch Differenzbildung der beiden Signale RS1 und RS2 (RS1 - RS2) die übergekoppelten Lichtanteile ganz oder teilweise eliminiert werden. Es ist aber auch möglich, von vornherein eine vollständige Entkopplung der Strahlungsfelder SF1 und SF2 zu erreichen, indem zum Beispiel Blenden eingesetzt werden (vgl. dazu die Figuren 7 und 8).

Ein Comparator COM in der Auswerteeinrichtung AE1 vergleicht die empfangenen Meßsignale RS1 und RS2 unabhängig voneinander mit einem gemeinsamen Sollwert RO. Die analogen, gemessenen Empfangssignale RS1 und RS2 sino im Vergleich zum optimal zu erwartenden Empfangssignal RO gemeinsam in einer Anzeigeeinrichtung AZ1 abgebildet. Die Momentaufnahme zeigt die korrespondierenden Intensitäten I der ausgekoppelten Sendesignale RS1 und RS2 im Vergleich zur optischen Sollmeßkurve RO in Abhängigkeit von der Zeit t. Im vorliegenden Fall verläuft die Intensitätsmeßkurve für das empfangene Sendesignal RS1 unterhalb der Sollwertintensitätskurve RD, das heißt, daß für die Faserenden des Lichtwellenleiters LW1 in der Mehrfachspleißeinrichtung MSE1 noch keine optimale Ausrichtung erzielt worden ist. Für den Lichtwellenleiter LW2 hingegen deckt sich der gemessene Intensitätsverlauf für das empfangene Sendesignal RS2 ungefähr mit der Sollwertkurve RO, das heißt, daß die beiden Kerne der Faserenden des Lichtwellenleiters LW2 ausreichend fluchtend aufeinander ausgerichtet sind.

Aus der Differenz zwischen dem Empfangssignal RS1 und dem Sollwert RO kann gegebenenfalls ein Stellsignal R1 = (RS1 - RO) erzeugt werden, das dann über die Leitung SS1 dem Teil-Stellglied SG1 für den Lichtwellenleiter LW1 zugeführt wird. Nach erfolgter optimaler Ausrichtung wird die Differenz und damit das Stellsignal R1 zu null. Analog wird mit der Differenz ( R2 = RS2 - RO) aus dem Empfangssignal RS1 und dem Sollsignal RO verfahren, das über die Leitung SS2 dem Teil-Stellglied SG2 zugeführt wird. Daneben kann anstelle der parallelen Stellsignal-Zuführung über zwei Leitungen SS1 und SS2 auch eine serielle Übertragung der Stellsignale zu den Stellgliedern SG1 und SG2 über eine einzige Leitung erfolgen, wobei beim Signalwechsel von (RS1 - RO) auf (RS2 - RO) vom Stellglied SG1 auf das Stellglied SG2 umzuschalten ist.

Anstelle der Anzeigeeinrichtung AZ1 oder ergänzend hierzu können zwei getrennte Meßanzeigeeinrichtungen MG1 und MG2 (zum Beispiel zwei Zeigerinstrumente) vorgesehen sein, die die beiden Signalpegel RS1 und RS2 getrennt anzeigen.

Anstelle einer automatischen Justierung der beiden Faserenden der Lichtwellenleiter LW1 und LW2 in der Mehrfachspleißstelle MSE1 kann dort auch eine Justierung von Hand durchgeführt werden. Dazu liest eine Bedienungsperson die Anzeigen der Meßgeräte MG1 und MG2 und/oder der Anzeigeeinrichtung AZ1 ab und betätigt die Stellglieder SG1 bzw. SG2.

Liegt bereits eine Mehrzahl von fertigen Spleißverbindungen vor (zum Beispiel durch eine gleichzeitige Mehrfachspleißverbindung bei einem die Lichtwellenleiter LW1 und LW2 enthaltenden Lichtwellenleiter-Bändchen BL (vgl. Figur 2)), so kann mit der erfindungsgemäßen Meßeinrichtung die Qualität dieser Spleißverbindung beurteilt werden. Ist zum Beispiel die Spleißverbindung des Lichtwellenleiters LW1 mißraten, so würde das Signal RS1, wie bei der Anzeigeeinrichtung AZ1 dargestellt, erheblich unterhalb des Sollwertes RO liegen. In diesem Fall ist eine Nachjustierung zwar nicht mehr durchführbar, es besteht aber die Möglichkeit, die Spleißstelle herauszuschneiden und den Spleißvorgang zu wiederholen bis die Toleranzwerte eingehalten werden, d.h., bis sowohl das Signal RS1 als auch das Signal RS2 ausreichend nahe beim Sollwert RO liegen. In der Anzeigeeinrichtung AZ1 liegt das Signal RS1 dann dort, wo jetzt das Signal RS2 liegt.

Zur besseren Veranschaulichung ist in Figur 2 für den Zylinder ZR1 der Koppeleinrichtung KR1 mit einer Führungsnut FN eine schematische und vergrößerte Schnittbilddarstellung gewählt. Diese zeigt die Lichtwellenleiter-Bandleitung BL bestehend aus den zwei Lichtwellenleitern LW1 und LW2 in der Führungsnut FN aus einer Ansicht, die man erhält, wenn man die Lichtwellenleiter quer zu ihrer Längsachse schneidet. Die Bandleitung BL wird im Zylinder ZR1 in der Führungsnut FN seitlich gehalten, um während des Meßvorgangs eine bezüglich der Lichtwellenleiter-Längsachsen laterale Verschiebung der Lichtwellenleiter-Positionen weitgehend zu verhindern. Dazu ist zweckmäßigerweise die Führungsnut FN z.B. hinsichtlich ihrer Tiefe und Breite so gestaltet, daß die Lichtwellenleiter-Bandleitung BL durch die Nut FN fixiert werden. Zugleich erfahren die beiden Lichtwellenleiter LW1 und LW2 in der Führungsnut FN die gleiche Krümmung, so daß für beide identische Auskoppelverhältnisse (z.B. gleiche Krümmungsradien) gelten. Dabei ist vorausgesetzt, daß die Beschichtungen beider Lichtwellenleiter gleich sind. Sind zum Beispiel durch unterschiedliche Farbauflage auch unterschiedliche Auskoppelverhältnisse gegeben, so kann dies zum Beispiel in Form eines entsprechenden Korrekturwertes mitberücksichtigt werden. Mit Hilfe dieser Maßnahmen sind annähernd konstante Meßbedingungen sichergestellt.

In der Bandleitung BL, für deren Ummantelung vorzugsweise ein Kunststoff wie z.B. Urethanacrylate, Pe, PB gewählt ist, liegen die Lichtwellenleiter LW1 und LW2 mechanisch miteinander verbunden parallel nebeneinander. Auf diese Weise erreicht man, daß die aus den Lichtwellenleitern LW1 und LW2 ausgekoppelten Strahlungsfelder SF1 und SF2 eigenständig und unabhängig ebenfalls parallel nebeneinander liegen. Figur 2 stellt zur besseren Veranschaulichung die Strahlungsfelder SF1 und SF2 und die lichtempfindlichen Elemente LE1 und LE2 um 90° nach unten geklappt dar. Die beiden Strahlungsfelder SF1 und SF2 sind jeweils durch eine Strahlungskeule angedeutet. Richtung und Stärke der maximalen Energiedichte des Strahlungsfelds SF1 bzw. SF2 sind jeweils durch Betrag und Richtung des Strahlungsvektors VF1 bzw. VF2 gekennzeichnet. In einer Ebene quer zu diesen Hauptabstrahlungsrichtungen (gekennzeichnet durch die Strahlungsvektoren VF1 und VF2) der Strahlungsfelder SF1 und SF2 sind die beiden lichtempfindlichen Elemente LE1 und LE2 feststehend positioniert bzw. justiert. Die Empfangscharakteristika der beiden lichtempfindlichen Elemente LE1 und LE2 sind symmetrisch zur Symmetrieebene SA2 der Strahlungsfelder SF1 und SF2 so ausgerichtet, daß die beiden Strahlungsvektoren VF1 und VF2 jeweils senkrecht auf deren Zentren stehen. Auf diese Weise wird gewährleistet, daß die lichtempfindlichen Elemente LE1 und LE2 jeweils unterschiedliche Teile der Strahlungsfelder SF1 und SF2 erfassen. Das lichtempfindliche Element LE1 ist so justiert, daß bei Abwesenheit des Strahlungsfeldes SF2 der Photostrom aus dem Strahlungsfeld SF1 maximal ist. Analog ist das Element LE2 so justiert, daß bei Abwesenheit von SF1 der Photostrom aus SF2 maximal wird. Da es in einem Bereich CA jedoch zu einer Überkoppelung der Lichtanteile kommt, nimmt das lichtempfindliche Element LE1 auch einen Teil der Strahlung des Lichtwellenleiters LW2 auf und umgekehrt das lichtempfindliche Element LE2 einen Teil der Strahlung des Lichtwellenleiters LW1. Aufgrund der symmetrischen Anordnung oder durch den Einsatz einer Blende (vgl. die Figuren 7 und 8) zwischen den lichtempfindlichen Elementen LE1 und LE2 ist es aber möglich, die Strahlungsfelder SF1 und SF2 vollständig zu entkoppeln. Eine weitere vorteilhafte Randbedingung für möglichst überlagerungsfrei nebeneinanderliegender Strahlungsfelder SF1 und SF2 ist auch dann gegeben, falls die Strahlungsvektoren VF1 und VF2 stark auseinanderdivergieren.

Es kann somit stets eine ausreichend eineindeutige Zuordnung der Lichtwellenleiter LW1 und LW2 bzw. ihrer zugehörigen Strahlungsfelder SF1 uns SF2 zu den lichtempfindlichen Elementen LE1 und LE2 sichergestellt werden, so daß die optischen Kenngrößen selektiv exakt ermittelt werden können.

In der Figur 3 sind in den optischen Empfänger OR2 analog zu Figur 1 vier Lichtwellenleiter parallel nebeneinander um den Zylinder ZR3 der Koppeleinrichtung KR3 herumgelegt. Aus den vier Lichtwellenleitern LW1 bis LW4 werden vier Strahlungsfelder SF1 bis SF4 nach dem Biegekopplerprinzip ausgekoppelt. Diese sind über ihre Strahlungsvektoren VF1 bis VF4 angedeutet. Den vier Strahlungsfelder SF1 bis SF4 stehen im Auskoppelbereich die beiden lichtempfindlichen Elemente LE1 und LE2 zum Empfang gegenüber. Es handelt sich somit um eine Variante der Erfindung, bei der die Anzahl der lichtempfindlichen Elemente kleiner als die Anzahl der zu untersuchenden Lichtwellenleiter ist. Die lichtempfindlichen Elemente LE1 und LE2 wandeln die aus den vier Strahlungsfelder SF1 bis SF4 anteilig empfangene Lichtenergie in die beiden elektrischen Meßsignale RS1 und RS2 um. Letztere können zur selektiven Bestimmung der optischen Kenngrößen der Lichtwrllenleiter LW1 bis LW4 in einer Auswerteeinrichtung AE1 analog zur Figur 1 folgendermaßen herangezogen werden:

In der Figur 4 werden die Strahlungsfelder SF1 und SF2 einer Gruppe von interessierenden Lichtwellenleitern LW1 und LW2, die zu einer Zweier-Bandleitung ZBL1 zusammengefaßt sind, eigenständig und unabhängig voneinander von den beiden lichtempfindlichen Elementen LE1 und LE2 erfaßt. Die Darstellungsart der Figur 4 und der nachfolgenden Figur 5 ist analog zu Figur 2 gewählt. Da es sich um eine eindeutige Zuordnung des Strahlungsfelds SF1 zu dem lichtempfindlichen Element LE1 und des Strahlungsfeld SF2 zu dem lichtempfindlichen Element LE2 bzw. dem Meßsignal RS2 handelt, ist analog zu den Figuren 1 und 2 eine selektive und individuelle Bestimmung der optischen Übertragungs-Kenngrößen einer Gruppe von Lichtwellenleitern LW1 und LW2 exakt möglich. Interessieren die optischen Kenngrößen einer weiteren Gruppe von Lichtwellenleiter LW3 und LW4 z.B. einer Zweier-Bandleitung ZBL2, so können diese in gleicher Weise bestimmt werden, indem die beiden lichtempfindlichen Elemente LE1 und LE2 in eine in Figur 4 strichpunktiert eingezeichnete Lage verschoben und positioniert werden. Das Meßsignal RS1 entspricht dann der Lichtenergie des Strahlungsfeldes SF3 und das Meßsignal RS2 der Lichtenergie des Strahlungsfeldes SF4. Anstelle einer Verschiebung der lichtempfindlichen Elemente LE1 und LE2 kann auch der Zylinder ZR3 der Koppeleinrichtung KR3 mit den Lichtwellenleitern in seiner Längsachse so verschoben werden, daß die Strahlungsfelder SF3 und SF4 auf die feststehenden, lichtempfinlichen Elemente LE1 und LE2 treffen.

In der Figur 5 sind die beiden lichtempfindlichen Elemente LE1 und LE2 symmetrisch zur Symmetrieebene SAS der beiden Gruppen von Lichtwellenleitern LW1/LW2 und LW3/LW4 angeordnet. Die Strahlungsfelder SF1 und SF2 treffen bezüglich ihrer Hauptabstrahlungsrichtungen jeweils gemeinsam auf das lichtempfindliche Element LE1 senkrecht auf, während die Strahlungsfelder SF3 und SF4 auf das lichtempfindliche Element LE2 fallen. Das elektrische Meßsignal RS1 entspricht dann der überlagerten Summe der beiden Strahlungsfelder SF1 und SF2, das elektrische Meßsignal RS2 der überlagerten Summe der beiden Strahlungsfelder SF3 und SF4. Auf diese Weise gewinnt man jeweils einen Meßwert für jede Gruppe von Lichtwellenleitern. Derart gruppenweise gewonnene Meßergebnisse sind aussagekräftiger als eine einzige Messung aller Strahlungsfelder mit einem einzigen lichtempfindlichen Element.

Im Rahmen eines Spleißvorganges ist eine derartige qualitative Aussage über eine Gruppe von Lichtwellenleitern zum Beispiel insbesondere dann bereits ausreichend, wenn zum Beispiel diese Gruppe zu einer Bandleitung zusammengefaßt ist. In diesem Fall muß nämlich ohnehin die Spleißverbindung aller Lichtwellenleiter der jeweiligen Bandleitung aufgetrennt und neu erstellt werden.

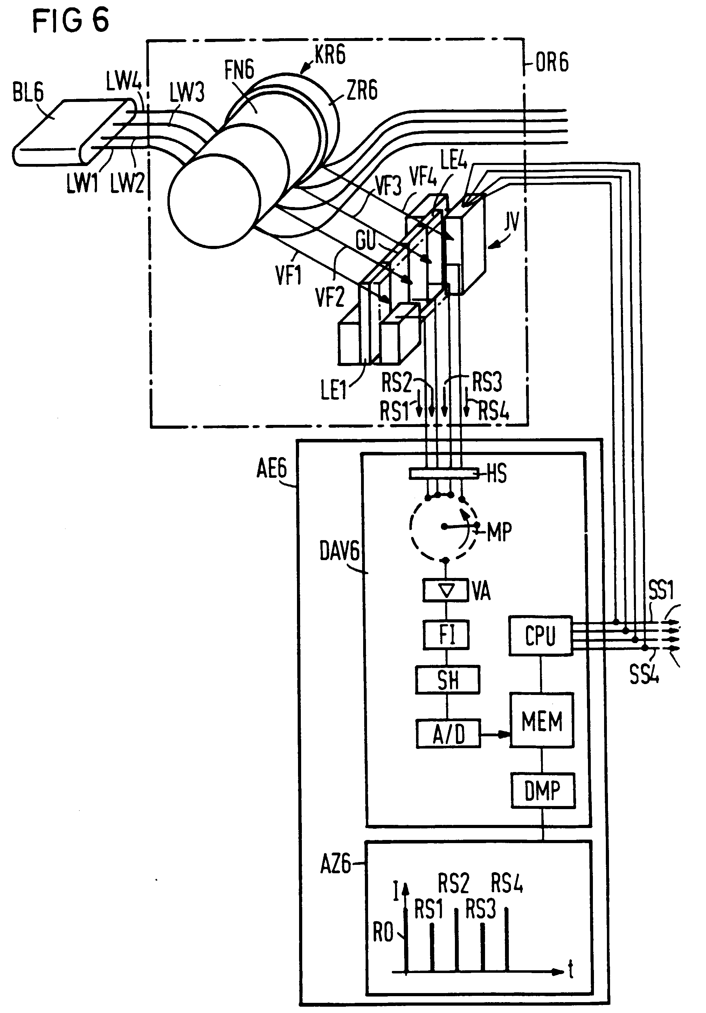

Die Figur 6 zeigt schematisch ein zweites Ausführungsbeispiel der erfindungsgemäßen Meßeinrichtung mit vier Lichtwellenleitern LW1 bis LW4, vier lichtempfindlichen Elementen LE1 bis LE4 und einer digitalen Auswerteeinrichtung AE6, die eine digitale Auslese- und Verarbeitungseinheit DAV6 und eine Anzeigeeinrichtung AZ6 aufweist. Der analog zu Figur 1 ausgebildete Sendeteil ist hier zur Vereinfachung der Darstellung weggelassen. Die vier Lichtwellenleiter LW1 bis LW4 sind in Form einer Bandleitung BL6, deren äußere Hülle im linken Teil der Figur 6 angedeutet und im übrigen Figurenteil zugunsten der Übersichtlichkeit weggelassen worden ist, zu einer Gruppe zusammengefaßt und parallel nebeneinander mechanisch fixiert. Diese Gruppe wird in die Führungsnut FN6 des Zylinders ZR6 der Koppeleinrichtung KR6 eingelegt. Aus vier Lichtwellenleitern LW1 bis LW4 werden die vier Strahlungsfelder SF1 bis SF4, in Figur 6 bezüglich ihrer Hauptabstrahlungsrichtungen durch vier Strahlungsvektoren VF1 bis VF4 repräsentiert, nach dem Biegekopplerprinzip ausgekoppelt. Sie treffen jeweils auf die ihnen in einer Ebene quer zu den Hauptabstrahlungsrichtungen VF1 bis VF4 zugeordneten lichtempfindlichen Elementen LE1 bis LE4 auf. Deren Empfangscharakteristika sind jeweils den Strahlungsvektoren VF1 bis VF4 der Strahlungsfelder SF1 bis SF4 eindeutig zugeordnet und auf diese jeweils so aufgerichtet, daß zumindest jeweils der Hauptanteil des jeweiligen Strahlungsfelds empfangen werden kann. Die Lichtenergie der Strahlungsfelder SF1 bis SF4 wird von den lichtempfindlichen Elementen LE1 bis LE4 jeweils in die elektrischen Meßsignale RS1 bis RS4 umgewandelt. Diese werden in einem Haltespeicher HS der Auslese- und Verarbeitungseinheit DAV6 zumindest für vier Taktperioden eines nachfolgenden Multiplexers MP abgespeichert. Der Multiplexer MP liest die einzelnen Meßsignale RS1 bis RS4 in vier Taktperioden sukzessive zeitlich hintereinander aus dem Haltespeicher HS aus. Anschließend werden die kontinuierlichen Meßsignale RS1 bis RS4 seriell über einen Verstärker VA geführt und mit Hilfe eines Filters FI von Störsignalen befreit. Die kontinuierlichen Meßsignale RS1 bis RS4 werden mit Hilfe eines Sample- and Hold-Gliedes SH und einem Analog-Digital-Umsetzer UA/D diskretisiert und in einem Meßwertspeicher MEM abgelegt. Die weitere Signalverarbeitung der Meßsignale RS1 bis RS4 übernimmt eine Recheneinheit CPU, die die registrierten Meßsignale funktional miteinander verknüpft, so daß für jeden Lichtwellenleiter LW1 bis LW4 die zugehörigen optischen Übertragungs-Kenngrößen selektiv bestimmbar sind.

Zur visuellen Beurteilung der optischen Übertragungs-Kenngrößen wie zum Beispiel der Spleißdämpfungen werden diese aus dem Meßwertspeicher MEM ausgelesen und über einen Demultiplexer DMP einer Anzeigeeinrichtung AZ6 zugeführt. Die diskreten Zeitmultiplex-Meßsignale RS1 bis RS4 sind gemeinsam in dieser im Vergleich zu einem optimal zu erwartenden Sollwert RO abgebildet. Die fortlaufende Momentaufnahme zeigt die Intensitäten I der vier Meßsignale RS1 bis RS4 im Vergleich zum gemeinsamen Sollwert RO in Abhängigkeit von der Zeit t. Diese Meßwerte RS1 bis RS4 beschreiben jeweils die integrale Summe der Lichtmenge der ausgekoppelten Strahlungsfelder SF1 bis SF4. Die Meßsignale RS2 und RS4 stimmen mit dem optimalen Sollwert RO überein. Hinsichtlich der Beurteilung von Spleißdämpfungen sind die Spleiße in den Lichtwellenleitern LW2 und LW4 somit optimal ausgeführt. Die beiden Meßwerte RS1 und RS3 liegen dagegen unterhalb des optimalen Sollwertes RD, das heißt, in den Lichtwellenleitern LW1 und LW3 sind noch keine optimalen Spleißverbindungen hergestellt worden.

Bei entsprechend schneller Abtastung kann mit den Bildfolgen auf der Anzeige- oder Registriereinrichtung, zum Beispiel einem Drucker, der zeitliche Ablauf des Spleißvorgangs selbst erfaßt und zum Beispiel für Optimierungszwekke dieses Vorgangs herangezogen werden.

Zur optimalen Ausrichtung der jeweiligen Faserenden der Lichtwellenleiter LW1 bis LW4 in einer Mehrfachspleißeinrichtung MSE1 gemäß Figur 1 können mit Hilfe der Recheneinheit CPU jeweils analog zu Figur 1 aus der Differenz zwischen den Empfangssignalen RS1 bis RS4 und den gemeinsamen Sollwert RO Stellsignale R1 bis R4 erzeugt werden. Diese können über die Leitungen SS1 bis SS4 vier Teil-Stellglieder in der Mehrfachspleißstelle MSE1 analog zu Figur 1 vorteilhaft ansteuern.

Darüber hinaus eignen sich diese Stellsignale R1 bis R4 auch vorteilhaft dazu, eine Justierungsvorrichtung JV zur Optimierung der Zuordnung zwischen den lichtempfindlichen Elementen LE1 bis LE4 und den Strahlungsfeldern SF1 bis SF4 über die Steuerleitungen SS1 bis SS4 zu betätigen. Die Justierungsvorrichtung JV erlaubt zumindest eine Verschiebung der lichtempfindlichen Elemente LE1 bis LE4 in lateraler Richtung zu den Strahlungsvektoren VF1 bis VF4. Die lichtempfindlichen Elemente LE1 bis LE4 können dabei vorteilhaft einzeln, oder falls sie auf einer gemeinsamen Unterlage GU, wie in Figur 6 strichpunktiert dargestellt, angeordnet sind, zweckmäßigerweise gemeinsam ausgerichtet werden.

Insgesamt betrachtet können im Fall, daß die Anzahl der lichtempfindlichen Elemente gleich der Anzahl der zu untersuchenden Lichtwellenleiter ist, deren optische Kenngrößen selektiv besonders exakt gemessen werden.

In den Figuren 7 und 8 sind Blenden BL1 bis BL3 zwischen den lichtempfindlichen Elementen LE1 bis LE4 des optischen Empfängers OR6 nach Figur 6 eingefügt. Figur 7 zeigt vergrößert deren räumliche Anordnung, Figur 8 deren Ansicht in einer Darstellung analog zu Figur 2 mit den Strahlungsfeldern SF1 bis SF4 nach Figur 6. Vorteilhaft können sich die Blenden BL1 bis BL3 dabei entgegen der Richtung der Strahlungsvektoren VF1 bis VF4 (vergleiche hierzu Figur 6) bis in die Nähe der Lichtwellenleiter LW1 bis LW4 in der Führungsnut FN6 des Zylinders ZR6 erstrecken. Die Lichtwellenleiter LW1 bis LW4 sind in den Austrittspunkten der Strahlungsfelder SF1 bis SF4 abgebrochen dargestellt. Die Blenden BL1 bis BL3 verlaufen parallel zueinander und zu den Strahlungsvektoren VF1 bis VF4.

Um die laterale Ortsraumauflösung der lichtempfindlichen Elemente LE1 bis LE4, das heißt in einer Ebene quer zu den Hauptabstrahlungsrichtungen VF1 bis VF4, nicht zu verringern, ist die Wandstärke d2 der Blenden BL1 bis BL3 geringer als die Breite d 1 der lichtempfindlichen Elemente LE1 bis LE4 ( lmm) (vergleiche hierzu Figur 8) gewählt und zwar in der Größenordnung von einigen µm. Auf diese Weise wird gewährleistet, daß die Blenden ein Überkoppeln benachbarter Strahlungsfelder SF1 bis SF4 verhindern, so daß deren gewünschte vollständige Entkopplung erzielt werden kann. Dadurch kann besonders exakt und eindeutig gemessen werden.

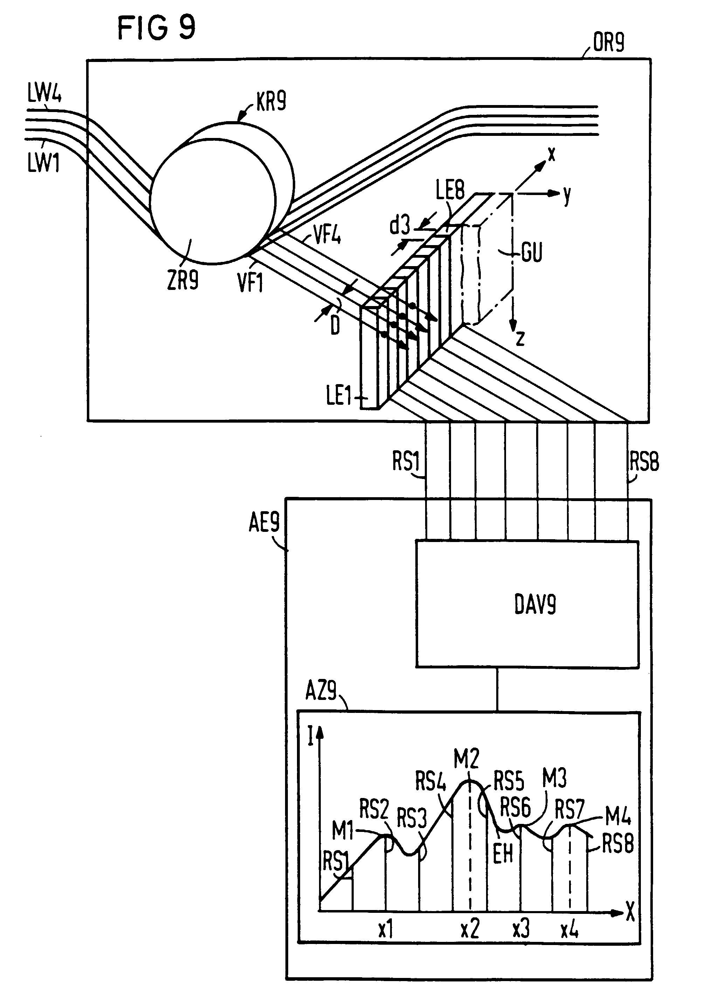

Figur 9 zeigt eine optische Empfangseinrichtung OR9 einer Meßeinrichtung. Vier Lichtwellenleiter LW1 bis LW4 sind im optischen Empfänger OR9 um den Zylinder ZR9 der Koppeleinrichtung KR9 herumgelegt und erzeugen vier unabhängige Strahlungsfelder SF1 bis SF4, deren Hauptabstrahlungsrichtungen durch die Strahlungsvektoren VF1 bis VF4 angedeutet werden. Die Lichtintensitäten dieser Strahlungsfelder SF1 bis SF4 werden von acht lichtempfindlichen Elementen LE1 bis LE8 empfangen und in elektrische Meßsignale RS1 bis RS8 umgewandelt. Zu diesem Zweck werden die lichtempfindlichen Elemente LE1 bis LE8 quer zu den Hauptabstrahlungsrichtungen positioniert. Ihre Anzahl ist in einem von den zu untersuchenden Strahlungsfeldern SF1 bis SF4 überstrichenen Strahlungsbereich größer als die Anzahl der Strahlungsfelder SF1 bis SF4 gewählt, so daß eine vergrößerte Ortsauflösung und damit eine noch weitere verbesserte Meßgenauigkeit erreicht wird, das heißt, der Abstand d3 zweier Mittenlinien benachbarter lichtempfindlicher Elemente LE1 bis LE8 ist kleiner als der Abstand D zweier benachbarter Strahlungsvektoren VF1 bis VF4. Aus diesem Grund kann eine Feinjustierung zwischen den Zentren der lichtempfindlichen Elemente LE1 bis LE8 una den die Hauptabstrahlungsrichtungen angebenden Strahlungsvektoren VF1 bis VF4 entfallen. Eine laterale Ausrichtung der lichtempfindlichen Elemente LE1 bis LE8, zum Beispiel mit Hilfe einer Justierungsvorrichtung JV nach Figur 6, ist im allgemeinen für eine exakte Messung der optischen Übertragungs-Kenngrößen nicht erforderlich.

Die elektrischen Meßgrößen RS1 bis RS8 werden einer zur Figur 6 analogen Auswerteeinrichtung AE9 mit zur Figur 1 analogen Bestandteilen und Funktionseinheiten (DAV9, AZ9) zugeführt und weiterverarbeitet.

In der Anzeigeeinrichtung AZ9 sind in einer Momentaufnahme die acht abgetasteten Ortsraum-Meßwerte RS1 bis RS8 über der lateralen Ortskoordinate x im Abstand d3 aufgezeichnet. Die kontinierliche Einhüllende EH der Abtastwerte RS1 bis RS8 ist mit Hilfe einer durchgezogenen Linie angedeutet. Diese Einhüllende EH weist vier Maxima M1 bis M4 auf, denen Ortskoordinaten xl bis x4 zugeordnet sind. Die Maxima M1 bis M4 entsprechen den Hauptabstrahlungsrichtungen VF1 bis VF4. Obwohl in diesem Beispiel davon ausgegangen ist, daß die lichtempfindlichen Elemente LE1 bis LE8 weder optimal noch symmetrisch zu den jeweiligen Hauptabstrahlungsrichtungen VF1 bis VF4 ausgerichtet sind, läßt sich durch die Maxima M1 bis M4 der Einhüllenden EH sowohl die Lage der Strahlungsvektoren VF1 bis VF4 als auch deren jeweiliger Intensitätswert I ermitteln.

Vorteilhaft kann eine funktionale Abhängigkeit zwischen den Abtastwerten RS1 bis RS8 in der Verarbeitungseinheit DAV9 zum Beispiel über einen verketteten Gaußschen Algorithmus näherungsweise oder nach dem Abtasttheorem von Shannon exakt bestimmt werden, so daß die Einhüllende EH der acht Abtastwerte RS1 bis RS8 funktional vorliegt und deren Maxima M1 bis M4 exakt abgeleitet werden können.

Weiterhin ist es bei einer großen Zahl von lichtempfindlichen Elementen LE1 bis LE8 von Vorteil, diese zur besseren Handhabung auf einer gemeinsamen Unterlage GU, die in der rechten Bildhälfte von Figur 6 strichpunktiert dargestellt ist, anzubringen. Auf dieser können die lichtempfindlichen Elemente LE1 bis LE8 zweckmäßigerweise in einer Zeilen- oder in einer Array- Struktur angeordnet sein.

Besonders günstige Eigenschaften hinsichtlich der Auswerte- und Auslesemöglichkeiten der elektrischen Meßsignale RS1 bis RS8 weisen neben den üblichen Dioden vor allem lichtempfindliche Elemente LE1 bis LE8 mit einem internen Ladungsverstärker oder sogenannten CCD-Elemente auf. Letztere bieten den Vorteil, daß ihre Speicherwerte für eine A/D-Umsetzung besonders günstig sind, so daß die Meßsignale RS1 bis RS8 direkt in einem digitalen Rechnersystem oder in einem digitalen bildgebenden System (CCD-Kamera, Bildverarbeitung) ausgewertet werden können. Darüber hinaus wird mit Hilfe dieser Maßnahme vor allem die Handhabung einer sehr großen Anzahl von lichtempfindlichen Elementen erleichtert. Vorteilhaft eignen sich Zeilen mit 10 bis 2000 Elementen oder Arrays mit 10 bis 2000 mal 10 bis 2000 Elementen. (Video-Norm). Geeignet sind z.B. Photodioden- und CCD-Arrays der Firma EG & G Reticon (USA).

Die in den Figuren 1 bis 9 dargestellten Ausführungsbeispiele und die dazu getroffenen Aussagen beziehen sich zur besseren Veranschaulichung jeweils auf eine konkrete Zahl von Lichtwellenleitern und lichtempfindlichen Elementen. Sie sind jedoch ohne Einschränkung auf beliebig viele, das heißt n Lichtwellenleiter und m lichtempfindliche Elemente übertragbar.

Im günstigsten Fall ist für eine exakte Selektivmessung nach Fig. 9 die Anzahl m der lichtempfindlichen Elemente mindestens fünfmal so groß zu wählen wie die Anzahl n der Lichtwellenleiter. Zweckmäßig wird die Anzahl m der lichtempfindlichen Elemente zwischen 10 und 200 mal (bevorzugt etwa 100 mal) so groß wie die Anzahl n der Lichtwellenleiter gewählt.

Falls analog zu Figur 3 m < n gewählt wird, muß für m mindestens m ≥ 2 gelten. Dabei sollte zusätzlich für m gelten: m = k . n, wobei k mindestens 0,3, zweckmäßig zwischen 0,5 und bis zu 1,0 zu wählen ist.

Beim Auskoppeln und Empfang von Strahlungsfeldern mehrerer zu messender Lichtwellenleiter mittels lichtempfindlicher Elemente kann es gegebenenfalls zum gegenseitigen Überkoppeln benachbarter Strahlungskeulen kommen, so daß eine Auswertung der Strahlungsfelder und deren Koppelverhältnisse beeinträchtigt sein können.

Einer Weiterbildung der Erfindung liegt deshalb die Aufgabe zugrunde, einen Weg aufzuzeigen, wie die Koppelverhältnisse für Messungen an mehreren Lichtwellenleitern in einfacher Weise verbessert werden können. Diese Aufgabe wird dadurch gelöst, daß zwischen Auskoppelstellen der Lichtwellenleiter und den lichtempfindlichen Elementen Mittel vorgesehen sind, die eine vergrößerte Entkopplung benachbarter Strahlungsfelder bewirken.

Diese Weiterbildung der Erfindung zeichnet sich vor allem dadurch aus, daß die Möglichkeiten zum selektiven Empfang sowie zur getrennten Auswertung der Strahlungsfelder mehrerer Lichtwellenleiter verbessert bzw. optimiert sind. Dadurch, daß Mittel zur vergrößerten Entkopplung benachbarter Strahlungsfelder wie z.B. optische Abbildungsmittel, Hologramme, Bragg-Zelle, usw. zwischen den Auskoppelstellen der Lichtwellenleiter und den lichtempfindlichen Elementen angeordnet werden, wird der selektive Empfang der Strahlungsfelder optimiert, d.h. deren Strahlungskeulen werden von den lichtempfindlichen Elementen weitgehend entkoppelt voneinander erfaßt. Durch diese Mittel werden die Strahlungsfelder bzw. deren Lichtanteile so transformiert, daß sie getrennt bzw. separat voneinander auf die lichtempfindlichen Elemente fallen, wobei eine Störung oder Wechselwirkung zwischen benachbarten Strahlungskeulen weitgehend vermieden ist. Aufgrund der verbesserten Entkopplung können somit die an ihren Auskoppelstellen einzeln aus den zu messenden Lichtwellenleitern austretenden Strahlungsfelder weitgehend verlustarm auf die lichtempfindlichen Elemente übertragen bzw. abgebildet werden, so daß dort deren getrennte Auswertung ermöglicht ist.

Gemäß einer zweckmäßigen Weiterbildung der Erfindung weisen die Strahlungsfelder quer zur Verbindungslinie der Lichtwellenleiter jeweils eine größere Ausdehnung auf als entlang deren Verbindungslinie. Dadurch, daß die Strahlungsfelder so abgebildet werden, daß sie senkrecht zu ihrer Ausbreitungsrichtung eine größere räumliche Ausdehnung als in Richtung der Verbindungslinie der Lichtwellenleiter, d.h. entlang der Verbindungsgeraden deren Auskoppelstellen, aufweisen, wird vorteilhaft dafür gesorgt, daß die Strahlungsfelder entkoppelt voneinander auf die lichtempfindlichen Elemente abgebildet werden. Dies stellt eine selektive, individuelle Auswertung der jeweiligen Strahlungsfeld-Lichtanteile für jeden einzelnen zu messenden Lichtwellenleiter weitgehend unbeeinflußt von Störungen benachbarter Strahlungsfelder sicher. Als Mittel zur selektiven, entkoppelten Abbildung der Strahlungsfelder eignen sich vorteilhaft optische Abbildungsmittel, wie z.B. Auskoppeloptiken, insbesondere ein Linsensystem, das z.B. ein monochromatisch korrigiertes Triplett enthält. Desweiteren können die Strahlungsfelder vorteilhaft z.B. auch mit Hilfe eines Phasen-Hologramms oder z.B. mit Hilfe einer Bragg-Zelle auf die lichtempfindlichen Elemente mit vergrößerter Entkopplung abgebildet bzw. transformiert werden.

Eine Weiterbildung der Erfindung betrifft auch ein Verfahren mit Hilfe einer Meßeinrichtung der eingangs genannten Art, welches dadurch gekennzeichnet ist, daß die Strahlungsfelder mit vergrößerter gegenseitiger Entkopplung auf die lichtempfindlichen Elemente abgebildet werden.

Eine Weiterbildung der Erfindung betrifft auch eine Einrichtung für Messungen an mehreren Lichtwellenleitern, insbesondere gemäß der ersten erfindungsgemäßen Meßeinrichtung, welche dadurch gekennzeichnet ist, daß der optische Empfänger derart ausgebildet ist, daß mindestens ein lichtempfindliches Element relativ gegenüber den zu messenden Lichtwellenleitern quer zur Ausbreitungsrichtung der Strahlungsfelder verschiebbar angeordnet ist.

Dadurch, daß mindestens ein lichtempfindlichen Element relativ gegenüber den zu messenden Lichtwellenleitern quer zur Ausbreitungsrichtung der Strahlungsfelder mindestens einmal verschiebbar angeordnet ist, ist weitgehend sichergestellt, daß Strahlungsfelder, die aus den zu messenden Lichtwellenleitern jeweils an ihren Auskoppelstellen entlang deren Krümmungsabschnitte austreten, zeitlich nacheinander sowie selektiv von mindestens einem lichtempfindlichen Element erfaßt werden. Durch die Relativbewegung des lichtempfindlichen Elementes wird jeweils weitgehend eine separate Aufnahme des Strahlungsfeldes jedes zu messenden Lichtwellenleiters individuell sowie entkoppelt von benachbarten Strahlungsfeldern ermöglicht. Aus dem zeitlichen Verlauf der aufgenommenen Intentitätsverteilungen können detaillierte Informationen individuell für jeden Lichtwellenleiter z.B. über seinen Zustand, seine örtliche Lage (örtliche Intensitätsverteilung), sein Dampfungsverhalten ,u.s.w. gewonnen werden und somit für verschiedene Anwendungsfälle zur weiteren Auswertung selektiv bereitgestellt werden.

Eine Weiterbildung der Erfindung betrifft eine weitere Einrichtung für Messungen an mehreren Lichtwellenleitern, insbesondere gemäß der ersten und/oder der zweiten erfindungsgemäßen Meßeinrichtung, welche dadurch gekennzeichnet ist, daß der optische Empfänger derart ausgebildet ist, daß dessen Koppeleinrichtung mit den zu messenden Lichtwellenleitern relativ gegenüber mindestens einem lichtempfindlichen Element quer zur Ausbreitungsrichtung der Strahlungsfelder verschiebbar angeordnet ist.

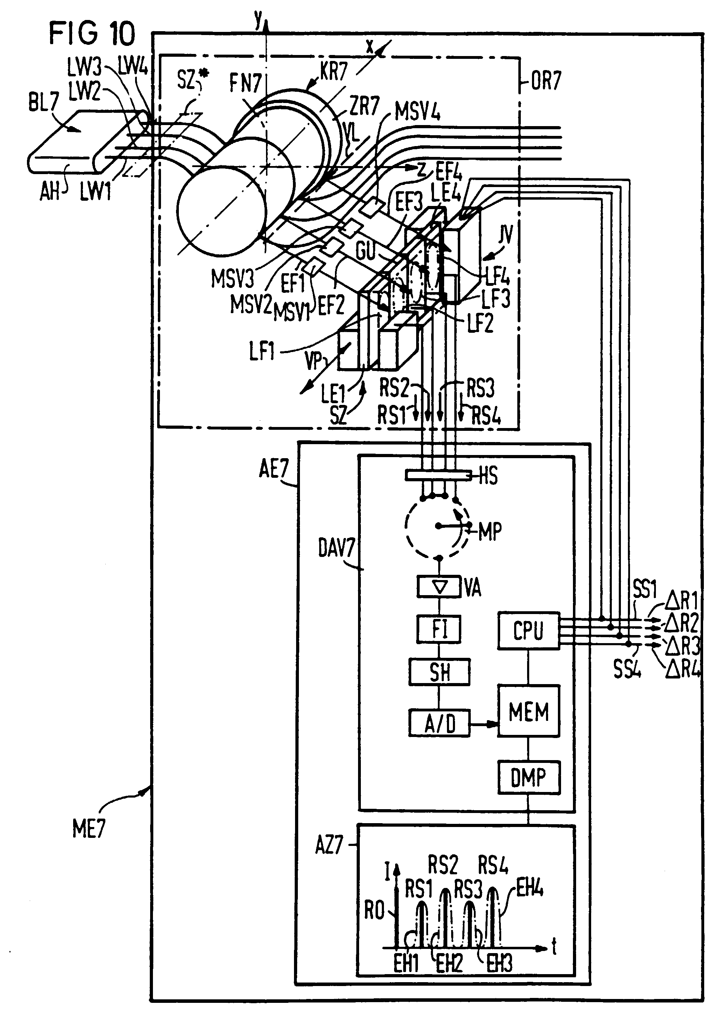

Figur 10 zeigt schematisch eine erfindungsgemäße Meßeinrichtung ME7 mit einem optischen Empfänger OR7 sowie einer Meßeinrichtung AE7. Der optische Empfänger OR7 ist an mehrere Lichtwellenleiter gleichzeitig, z.B. an vier Lichtwellenleiter LW1 - LW4, mit Hilfe einer Koppeleinrichtung KR7 angekoppelt. Die vier Lichtwellenleiter LW1 - LW4 sind in Fig.10 beispielhaft in Form eines Lichtwellenleiter-Bändchens bzw. einer Bandleitung BL7 zu einer Gruppe zusammengefaßt und durch deren äußere Umhüllung AH etwa parallel nebeneinander mechanisch fixiert. Die äußere Umhüllung AH der Bandleitung BL7 ist im linken Teil von Fig.10 angedeutet und im übrigen Figurenteil zugunsten der Übersichtlichkeit weggelassen worden.

In den Lichtwellenleiter LW1 - LW4 werden Lichtsignale, wie z.B. sendeseitig eigens eingekoppelte Meßlichtsignale oder auch Nachrichtensignale geführt. Die Einkopplung der Lichtsignale kann zweckmaßigerweise z.B. nach dem Biegekopplerprinzip oder direkt über die offenen Stirnseiten der Lichtwellenleiter LW1 - LW4 erfolgen.

Die Gruppe mit den vier Lichtwellenleitern LW1 - LW4, insbesondere die Bandleitung BL 7 mit der vorzugsweise transparenten äußeren Umhüllung AH, wird empfangsseitig in der Koppeleinrichtung KR7 des optischen Empfängers OR1 vorzugsweise um einen, z.B. etwa zylinderförmigen Biegebalken ZR7 in dessen Führungsnut FN7 gekrümmt herumgelegt. Dadurch werden jeweils Anteile der in den Lichtwellenleitern LW1 - LW4 geführten Lichtsignale entlang des jeweiligen Lichtwellenleiter-Krümmungsabschnitts an Auskoppelstellen nach dem Biegekopplerprinzip ausgekoppelt, d.h. es treten aus den vier zu messenden Lichtwellenleitern LW1 - LW4 an Auskoppelstellen entlang deren Krümmungen vier Strahlungsfelder EF1 - EF4 als Empfangs-Strahlungsfelder, etwa tangential aus. Die Auskoppelstellen liegen dabei im Bereich der Lichtwellenleiterkrümmungen etwa auf einer Verbindungslinie VL, die in Figur 10 strich-punktiert angedeutet ist und etwa quer zur Abstrahlungsrichtung der Strahlungsfelder EF1 - EF4 verläuft. In Figur 10 werden die vier Strahlungsfelder EF1 - EF4 bezüglich ihrer Hauptabstrahlungsrichtungen bzw. Ausbreitungsrichtungen durch vier einzeln zugeordnete Strahlungsvektoren repräsentiert.

Zwischen den Auskoppelstellen für die Strahlungsfelder EF1 - EF4 entlang der Lichtwellenleiter-Krümmungsabschnitte und einer Meß- bzw. Sensorzeile SZ, die etwa quer zur Ausbreitungsrichtung der vier Strahlungsfelder EF1 - EF4 positioniert ist, sind Mittel MSV1 - MSV4 vorgesehen, die eine vergrößerte Entkopplung benachbarter Strahlungsfelder, wie z.B. für EF1 und EF2 bewirken. Diese Mittel MSV1 - MSV4 sind den Strahlungsfeldern EF1 - EF4 bzw. deren Strahlungsgängen individuell zugeordnet. Dies ist in Figur 10 mittels Kästchen mit den Bezeichnungen MSV1 - MSV4 symbolisch angedeutet, die jeweils quer zu den Hauptabstrahlungsrichtungen der Strahlungsfelder EF1 - EF4, z.B. in einer Reihe angeordnet sind.

Die zwischengeschalteten Mittel MSV1 - MSV4 sorgen dafür, daß ein gegenseitiges Überkoppeln von Strahlungskeulen benachbarter Strahlungsfelder, wie z.B. von EF1 und EF2, weitgehend vermieden ist. Durch die Mittel MSV1 - MSV4 werden die Strahlungsfelder EF1 - EF4 ausgehend von ihren Auskoppelstellen auf die Meßzeile SZ separat bzw. getrennt voneinander, d.h. selektiv, übertragen, wobei eine Störung oder Wechselwirkung benachbarter Strahlungskeulen weitgehend vermieden ist. Die Mittel MSV1 - MSV4 transformieren bzw. bilden also jeweils die an den Auskoppelstellen austretenden Strahlungsfelder EF1 - EF4 auf ihrem Übertragungsweg zur Meßzeile SZ individuell derart ab, daß sie dort in deren Bereich mit verbesserter Entkopplung zueinander vorliegen und einer getrennten bzw. selektiven Auswertung zugänglich sind. Im Idealfall sind das die Oberflächen der Kerne der Lichtwellenleiter bzw. deren austretende Nahfelder.

In Figur 10 ist die Meßzeile SZ mit vier nebeneinander aufgestellten lichtempfindlichen Elementen LW1 - LW4 aufgebaut. Die Mittel MSV1 - MSV4 wirken auf die Strahlungsfelder EF1 - EF4 derart ein, daß diese im Bereich der vier lichtempfindlichen Elemente LW1 - LW4 mit vier separat zugeordneten Lichtflecken LF1 - LF4 einfallen. Den lichtempfindlichen Elementen LW1 - LW4 sind dabei die Licht- bzw. Leuchtflecken LF1 - LF4 in eindeutiger Weise zugeordnet. Die Licht- bzw. Leuchtflecken LF1 - LF4 sind zur Veranschaulichung auf den ihnen zugeordneten lichtempfindlichen Elementen LW1 - LW4 schematisch mit Hilfe strich-punktiert eingezeichneter, ovaler bzw. ellipsenförmiger Umrahmungen angedeutet.

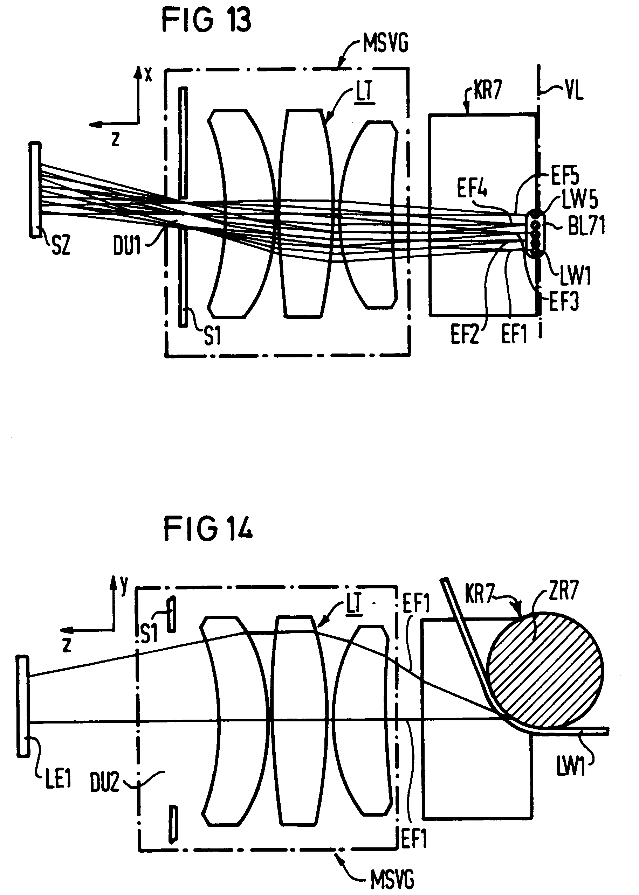

Als Mittel MSV1 - MSV4 zur besseren entkoppelten Abbildung der Strahlungsfelder können z.B. optische Abbildungsmittel, wie in den Figuren 13 und 14 dargestellt, vorgesehen sein. Desweiteren können die Strahlungsfelder EF1 - EF4 vorteilhaft auch mit Hilfe von Phasen-Hologrammen oder z.B. mit Hilfe einer Bragg-Zelle auf die lichtempfindlichen Elemente LW1 - LW4 mit vergrößerter Entkopplung abgebildet bzw. transformiert werden. Weitere Einzelheiten zum Abbildung der Strahlungsfelder EF1 - EF4 mit Hilfe optischer Abbildungsmittel sind in den Figuren 13 und 14 dargestellt.

Auf diese Weise werden die Strahlungsfelder EF1 - EF4 mit ihren zugeordneten Lichtflecken LF1 - LF4 selektiv von den lichtempfindlichen Elementen LW1 - LW4 erfaßt. Deren Empfangscharakteristika sind jeweils den Strahlungsfelder EF1 - EF4 eindeutig zugeordnet und auf diese jeweils so ausgerichtet, daß zumindest immer der Hauptanteil des jeweiligen Strahlungsfeldes empfangen werden kann. Die Lichtleistung der Strahlungsfelder EF1 - EF4 wird von den lichtempfindlichen Elementen LE1 - LE4 jeweils in die elektrischen Meßsignale RS1 - RS4 umgewandelt.

Bei einer diskreten bzw. digitalen Signalauswertung werden diese in einem Haltespeicher HS einer Auslese- und Verarbeitungseinheit DAV7 der Auswerteeinrichtung AE7 zumindest für vier Taktperioden eines nachfolgenden Multiplexers MP abgespeichert. Der Multiplexer MP liest die einzelnen Meßsignale RS1 - RS4 in 4 Taktperioden sukzessive zeitlich hintereinander aus dem Haltespeicher HS aus. Anschließend werden die kontinuierlichen Meßsignale RS1 - RS4 seriell über einen Verstärker VA geführt und mit Hilfe eines Filters FI von Störsignalen befreit. Die kontinuierlichen Meßsignale RS1 - RS4 werden z.B. mit Hilfe eines Sampel-and Hold-Gliedes SH und einem Anlalog-Digital-Umsetzer A/D diskretisiert und in einem Meßwertspeicher MEM abgelegt. Bei einer analogen Signalauswertung werden die kontinuierlichen Meßsignale RS1 - RS4 zweckmäßiger Weise direkt in den Meßwertspeicher MEM abgelegt. Die weitere Signalverarbeitung der Meßsignale RS1 - RS4 übernimmt eine Recheneinheit CPU, die die registrierten Meßsignale RS1 - RS4 ggf. funktional miteinander verknüpft, so daß für jeden Lichtwellenleiter LW1 - LW4 die zugehörigen Meßgrößen selektiv bestimmbar sind. Zur visuellen Beurteilung der optischen Meßgrößen, wie z.B. der Spleißdämpfungen, der Ortsverteilung der zu messenden Lichtwellenleiter, der Phasenlaufzeit, der Lichtwellenleiter-Identifizierung u.s.w. werden diese aus dem Meßwertspeicher MEM ausgelesen und im diskreten Verarbeitungsfall über einen Demultiplexer DMP eine Anzeigeeinrichtung AZ7 zugeführt.

Für die digitale Signalauswertung sind die diskreten Zeitmultiplex-Meßsignale RS1 - RS4 gemeinsam in der Anzeigeeinrichtung AZ7 abgebildet. Die fortlaufende Momentaufnahme zeigt den zeitlichen Intensitätsverlauf I der vier Meßsignale RS1 - RS4 in Abhängigkeit von der Zeit t. Diese Meßwerte RS1 - RS4 beschreiben jeweils die integrale Summe der Lichtmenge der ausgekoppelten Strahlungsfelder EF1 - EF4, die von den lichtempfindlichen Elementen LE1 - LE4 erfaßt wird. Die beiden Meßwerte RS1 und RS3 liegen unterhalb der Meßwerte RS2 und RS4, d.h. bei den lichtempfindlichen Elementen LE1 und LE3 wird in den Lichtwellenleitern LW1 und LW3 eine geringere geführte Lichtmenge gemessen. Jedem Lichtwellenleiter LW1 - LW4 ist also genau ein Meßwert RS1 - RS4 zugeordnet, da im Auskoppelbereich den vier zu messenden Lichtwellenleiter LW1 - LW4 die entsprechende Anzahl von lichtempfindlichen Elementen LE1 - LE4 eindeutig zugeordnet ist.

Für den Fall, daß die Anzahl der lichtempfindlichen Elemente größer als die Anzahl der zu messenden Lichtwellenleiter gewählt ist, d.h. es sind mehr als vier lichtempfindliche Elemente in der Meßzeile SZ vorgesehen, ergeben sich weitere, zusätzliche Meßwerte, mit zugehörigen strich-punktiert angedeuteten, selektiven Einhüllenden EH1 - EH4, wie sie in der Anzeigevorrichtung AZ7 für den Idealfall einer kontinuierlichen Meßsignalaufnahme angedeutet sind. Mit anderen Worten heißt das, daß neben den vier diskreten Meßwerten RS1 - RS4 noch zusätzliche, weitere diskrete Meßwerte unter den getrennt nebeneinanderliegenden Einhüllenden EH1 - EH4 hinzukommen, wobei die Anzahl der abgetasteten Meßwerte dann der Anzahl der lichtempfindlichen Elemente entspricht. Eine exakte, eindeutige Ausrichtung bzw. Zuordnung der Strahlungsfelder (bzw. der zu messenden Lichtwellenleiter) auf die lichtempfindlichen Elemente der Meßzeile SZ kann dann vorteilhaft entfallen.

Mit Hilfe der Recheneinheit CPU können vorteilhaft aus den selektiv aufgenommenen Empfangssignalen RS1 - RS4 vielfältige Informationen über die Lichtwellenleiter LW1 bis LW4 , wie z.B. über deren Lage, deren Zustand, deren Anzahl, deren optische Kenngrößen, wie Durchgangsdampfungen, Phasenlaufzeiten, u.s.w. gewonnen werden.

In Figur 10 werden z.B. aus den aufgenommenen Empfangssignalen RS1 - RS4 Stellsignale ΔR1 - ΔR4 gewonnen, mit deren Hilfe eine Justierungs- bzw. Bewegungsvorrichtung JV über Leitungen SS1 - SS4 zur Verschiebung der lichtempfindlichen Elemente LE1 - LE4 der Meßzeile SZ betätigt wird. Die Bewegungsvorrichtung JV erlaubt eine Verschiebung der lichtempfindlichen Elemente LE1 - LE4 der Meßzeile SZ in lateraler Richtung, d.h. quer zur Ausbreitungsrichtung der Strahlungsfelder EF1 - EF4 vorzugsweise in der Art einer "Jitter"-Bewegung. Die Relativbewegung ist durch einen Verschiebepfeil VP angedeutet. Die Meßzeile SZ ist also vorteilhaft gegenüber den Strahlungsfeldern EF1 - EF4 quer zu deren Ausbreitungsrichtungen mindestens einmal hin und her verschiebbar angeordnet. Durch die vorzugsweise kontinuierliche oder schrittweise Bewegung der Meßzeile SZ an den Strahlungsfeldern EF1-EF4 vorbei kann eine zeitliche Intensitätsmeßwertaufnahme der Strahlungsfelder EF1 - EF4 gewonnen werden, d.h. die Strahlungsfelder EF1 - EF4 werden mit höherer zeitauflösung und damit höherer Ortsauflösung getastet und stehen somit ebenfalls entkoppelt voneinander zur Auswertung zur Verfügung. Die Strahlungsfelder EF1 - EF4 werden somit durch die einzelnen lichtempfindlichen Elemente LE1 - LE4 der Meßzeile SZ in der Art einer Kamera z.B. "quasi-kontinuierlich" oder in diskreten Abtastschritten gescannt bzw. abgefahren. Somit steht für jedes einzelne Strahlungsfeld eine Vielzahl von Meßinformationen durch die verbesserte Ortsauflösung selektiv zur Verfügung. Die lichtempfindlichen Elemente LE1 - LE4 können dabei vorteilhaft einzeln oder auf einer gemeinsamen Unterlage GU, wie sie in Figur 10 strich-punktiert dargestellt ist, angeordnet sein. Gegebenenfalls können die lichtempfindlichen Elemente auch in Form eines Meßfeldes bzw. Meß-Arrays angeordnet sein. Vorteilhaft kann der optische Empfänger OR7 auch derart ausgebildet sein, daß anstelle der Meßzeile SZ seine Koppeleinrichtung KR7 mit den zu messenden Lichtwellenleitern LW1 - LW4 relativ gegenüber der Meßzeile SZ quer zur Ausbreitungsrichtung der Strahlungsfelder EF1 - EF4 verschiebbar angeordnet ist. Die Strahlungsfelder EF1 - EF4 werden also von den lichtempfindlichen Elementen scharf getrennt voneinander erfaßt und in der Anzeigeeinrichtung AZ7 entsprechend dargestellt.

Für eine selektive, individuelle Aufnahme der Strahlungsfelder EF1 - EF4 kann es aufgrund der Verschiebebewegung bereits ausreichend sein, im Koppelbereich der Koppeleinrichtung KR7 ein lichtempfindliches Element vorzusehen. Wird nur ein lichtempfindliches Element verschiebbar in der Justier- bzw. Bewegungseinrichtung JV angebracht, so weist dieses zur selektiven Strahlungsfeld-Aufnahme zweckmäßigerweise eine Ausdehnung quer zur Hauptabstrahlungsrichtung der Strahlungsfelder EF1 - EF4 aus, die etwa der Hälfte der jeweiligen Strahlungsfeldbreite entspricht. Mit Hilfe der Verschiebebewegung mindestens eines lichtempfindlichen Elementes ist es somit möglich, etwa die gleichen Meßergebnisse zu erhalten wie mit einer hochauflösenden Meßzeile SZ, d.h. einer sehr großen Anzahl von lichtempfindlichen Elementen, wobei deren Anzahl insbesondere größer ist als die Anzahl der Lichtwellenleiter. Durch die Verschiebebewegung der Meßzeile SZ mit mindestens einem lichtempfindlichen Element stehen somit wiederum weitgehend voneinander entkoppelte Strahlungsfelder zur Auswertung bereit.

Gegebenenfalls kann die empfangsseitige Koppeleinrichtung nach dem Biegekopplerprinzip auch durch andere Koppeleinrichtungen vorgenommen werden. So kann z.B. die empfangsseitige Koppeleinrichtung auch durch die direkt an die Enden der Lichtwellenleiter LW1 - LW4 angekoppelten lichtempfindlichen Elemente LE1 - LE4 gebildet sein. In der Koppeleinrichtung KR7 des optischen Empfängers OR7 ist dann der Biegebalken bzw. der Biegekoppler ZR7 weggelassen., so daß die Meßzeile SZ ggf. mit vorangeschalteten Entkopplungsmitteln MSV1 - MSV4 an den stirnseitigen offenen Enden der Lichtwellenleiter LW1 - LW4 quer zu deren Längsachse unmittelbar angeordnet ist. Diese weitere Ankoppelmöglichkeit für die Meßzeile SZ ist durch ein strich-punktiert angedeutetes Kästchen mit dem Bezugszeichen SZ* angedeutet, das in unmittelbarer Nähe (Ausgang) der offenen Stirnseite des Lichtwellenleiter-Bandchens BL7 eingezeichnet ist. Die nebeneinandergereihten lichtempfindlichen Elemente LE1 - LE4 der dort angeordneten Meßzeile SZ* sind bezüglich ihrer Empfangscharakteristika zweckmäßig quer zu den aus den offenen Stirnseiten der Lichtwellenleiter LW1 - LW4 ausgekoppelten Empfangs-Strahlungsfelder EF1 - EF4 derart positioniert, daß diese direkt oder ggf. unter Zwischenschaltung der Entkopplungsmittel MSV1 - MSV4 weitgehend selektiv auf die lichtempfindlichen Elemente LE1 - LE4 abgebildet werden. Die endseitig angeordnete Koppeleinrichtung in Form der Meßzeile SZ* ist insbesondere bei Strecken-Dampfungsmessungung zweckmäßig, wo die Enden der Lichtwellenleiter frei zugänglich sind.

Anstelle von Messungen an dem Lichtwellenleiter-Bändchen BL7 mit den etwa parallel nebeneinanderliegenden, d.h. weitgehend strukturiert angeordneten Lichtwellenleitern LW1 - LW4 können mit Hilfe der Meßeinrichtung ME7, insbesondere bei stirnseitiger bzw. endseitiger Anordnung der Meßzeile (SZ*), Messungen z.B. auch an einem Bündel oder einer Gruppe mit Lichtwellenleitern vorgenommen werden. Die Lichtwellenleiter können dabei auch in einer ungeordneten Struktur zueinander liegen, solange der selektive Empfang ihrer Strahlungsfelder weitgehend sichergestellt ist. Der optische Empfänger OR7 eignet sich dann insbesondere bei endseitiger Ankopplung der empfangsseitigen Koppeleinrichtung der lichtempfindlichen Elemente LE1 - LE4 (ohne der Lichtauskopplung nach dem Biegekopplerprinzip) zur Lichtwellenleiter-Identifizierung. So kann beispielsweise die Zahl der Lichtwellenleiter in der Gruppe bzw. dem Bündel, der Zustand, die optischen Kenngrößen (wie z.B. Dämpfung, Phasenlaufzeiten, Impulsantworten, ...) der Lichtwellenleiter selektiv, die räumliche Lage jedes einzelnen Lichtwellenleiters bzw. die örtliche Verteilung der Lichtwellenleiter insgesamt, usw. in einfacher Weise bestimmen und zur weiteren Auswertung bereitgestellt werden. Vorteilhaft sind dann bei einer Gruppe oder Bündel mit ungeordneten Lichtwellenleitern die lichtempfindlichen Elemente in Form mehrerer Meßzeilen gestaffelt übereinander (flächiges Array) angeordnet.

Wenn die lichtempfindlichen Elemente innerhalb des flächigen Arrays sehr hoch auflösend (d.h. kleinflächig) ausgebildet werden, dann kann im Endergebnis eine hochauflösende Abbildung z.B. der Lichtwellenleiterverteilung innerhalb eines Kabelbundels gewonnen werden. Hierzu ist es zweckmäßig, wenn jeweils die Größe der einzelnen lichtempfindlichen Elemente innerhalb des Arrays (Meßfeld) in x- und y-Richtung in der Größenordnung des auf sie auftreffenden Lichtflecks gewählt wird. Zweckmaßigerweise wird jeweils die aktive Flache eines einzelnen lichtempfindlichen Elementes etwa gleich der Fläche des auftreffenden Lichtflecks gewählt. Für noch höhere Auflösungen ist die aktive Fläche eines einzelnen lichtempfindlichen Elementes (Empfangselement) kleiner als die Fläche des auftreffenden Lichtflecks zu wählen.

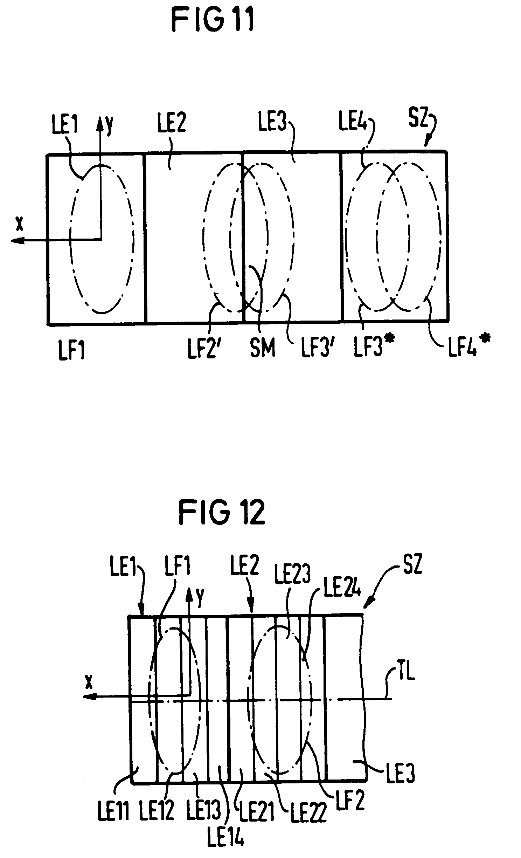

In Figur 11 sind zur Veranschaulichung der Koppelverhältnisse die vier lichtempfindlichen Elemente LE1 - LE4 der Meßzeile SZ von Fig.10 zusammen mit Strahlungsfeldern in einer Empfangsebene x, y (vgl. Figur 10) quer zur Ausbreitungsrichtung der Strahlungsfelder EF1 - EF4 dargestellt. Die Figur 11 verdeutlicht, wie die Mittel MSV1 - MSV4 wirken, damit die Strahlungsfelder EF1 - EF4 bzw. deren Lichtflecke LF1 - LF4 mit -optimierter, d.h. verbesserter Entkopplung von der Meßzeile SZ erfaßt werden können.

Z.B. fällt der dem Strahlungsfeld EF1 zugeordnete Licht- bzw. Leuchtfleck LF1 nur auf das lichtempfindliche Element LE1 und füllt den Großteil dessen aktiver Fläche mit seiner vorzugsweise etwa ellipsen- bzw. ovalen- oder z.B. auch streifenförmigen Form aus. Auf diese Weise ist weitgehend sichergestellt, daß das Strahlungsfeld EF1, das aus dem Lichtwellenleiter LW1 ausgekoppelt wird, möglichst verlustarm durch das Mittel MSV1 auf das lichtempfindliche Element LE1 transformiert und von diesem möglichst vollständig erfaßt wird. Im Bereich der Meßzeile SZ trifft also das Strahlungsfeld EF1 entkoppelt bzw. separiert von den übrigen Strahlungsfeldern EF2 - EF4 ein. Die Koppelverhältnisse für das Strahlungsfeld EF1 sind somit weitgehend ideal bzw. optimal. Um dies zu erreichen, ist die Form des Strahlungsfeldes EF1 bzw. dessen zugehöriger Lichtfleck LF1 der räumlichen Ausdehnung des lichtempfindlichen Elementes EF1 möglichst angepaßt.

Vorzugsweise weisen die Strahlungsfelder EF1 - EF4 in Figur 11 zu ihrer optimierten Entkopplung quer zur Verbindungslinie VL der Lichtwellenleiter LW1 - LW4, d.h. quer zur Ausbreitungsrichtung der Strahlungsfelder EF1 - EF4, jeweils eine größere Ausdehnung auf, als entlang der Verbindungslinie VL der Lichtwellenleiter LW1 - LW4, um die hier in Figur 11 etwa streifenförmigen lichtempfindlichen Elemente LE1 - LE4 möglichst vollständig auszunutzen. Die Mittel MSV1 - MSV4, die zwischen den Auskoppelstellen der Strahlungsfelder EF1 - EF4 und den zugeordneten lichtempfindlichen Elementen LE1 - LE4 vorgesehen sind, bewirken also eine Vergrößerung der Ausdehnung, insbesondere eine Verbreiterung in y-Richtung um mindestens den Faktor 2, der Strahlungsfelder EF1 - EF4 quer zur Verbindungslinie der Lichtwellenleiter LW1 - LW4 im Lichtwellenleiter-Bändchen BL7 und/oder eine Verschmälerung der Strahlungsfelder EF1 - EF4 im Bereich der lichtempfindlichen Elemente LE1 - LE4 entlang der Verbindungslinie der Lichtwellenleiter LW1 - LW4. Vorteilhaft ist die Ausdehnung der Strahlungsfelder (z.B. EF1 und EF2) in Richtung der Verbindungslinie VL der Lichtwellenleiter LW1 - LW4 so klein gewählt, daß sich jeweils im Bereich der Empfangselemente LE1 - LE4 benachbarte Leuchtflecke (z.B. LF1, LF2) nicht oder nur möglichst wenig überlappen. Vorteilhaft sind die jeweils von den Strahlungsfeldern EF1 - EF4 im Bereich der lichtempfindlichen Elemente LE1 - LE4 gebildeten Licht- bzw. Leuchtflecke LF1 - LF4 quer zur Verbindungslinie VL der Lichtwellenleiter somit größer, insbesondere mindestens zweimal so groß, als entlang der Verbindungslinie VL der Lichtwellenleiter LW1 - LW4. Zweckmäßig kann es auch sein, den Lichtflecken LF1 - LF4 der Strahlungsfelder EF1 - EF4 im Bereich der Meßzeile SZ mit Hilfe der zwischengeschalteten Mittel MSV1 - MSV4 jeweils eine Streifen- oder Linienform zu geben, so daß sie getrennt voneinander die z. B. hier in Figur 11 etwa streifenförmigen, lichtempfindlichen Elemente LE1 - LE4 optimal beleuchten. Durch diese besondere an die lichtempfindlichen Elemente angepaßte Formgebung der Lichtflecke LF1 - LF4, insbesondere mit optischen Abbildungsmitteln wie sie in den Figuren 13 und 14 dargestellt sind, wird eine verbesserte, d.h. optimierte Entkopplung der Strahlungsfelder EF1 - EF4 und somit eine verbesserte, selektive Auswertung in einfacher Weise erreicht.

In Figur 11 sind neben der für das Strahlungsfeld EF1 weitgehend optimalen Abbildung bzw. Transformation des Lichtflecks LF1 auch zwei Fälle dargestellt, in denen die Koppelverhältnisse und somit die Auswertung für die Strahlungsfelder EF2 - EF4 erschwert sind. So trifft beispielsweise das Strahlungsfeld EF2 mit seinem Leuchtfleck LF2' sowohl auf das lichtempfindlichen Element LE2 als auch auf das lichtempfindlichen Element LE3 auf. Ebenso wird das Strahlungsfeld EF3 mit seinem Lichtfleck LF3' vom lichtempfindlichen Element LE2 und vom lichtempfindlichen Element LE3 gleichzeitig erfaßt, so daß es zu einer Überlagerung der beiden Leuchtflecke LF2' und LF3' in einem Bereich SM kommt. Eine selektive Auswertung der Lichtflecke LF2' und LF3' ist somit durch deren Überlagerung im Bereich SM nur annähernd bzw. schwierig möglich.

Beeinträchtigungen der Koppel- bzw. Empfangsverhältnisse können sich auch ergeben, wenn die Lichtflecke im Fall einer starren Zuordnung der Strahlungsfeldern EF1 - EF4 zu den lichtempfindlichen Elementen LE1 - LE4 auf ein gemeinsames lichtempfindlichen Element abgebildet werden. Auf das lichtempfindliche Element LE4 von Figur 11 fallen z.B. die Strahlungsfelder EF3 und EF4 mit ihren Lichtflecken LF3' und LF4' gemeinsam, so daß deren selektive bzw. getrennte Auswertung beeinträchtigt ist. Für die beiden zuletzt beispielhaft genannten Problemfälle von Überkoppeln benachbarter Strahlungsfelder ist dennoch dadurch Abhilfe möglich, daß die lichtempfindlichen Elemente LE1 - LE4 quer zur Abstrahlungsrichtung der Strahlungsfelder EF1 - EF4 mindestens einmal hin- und/oder herverschoben werden, so daß eine zeitliche und damit auch eine Örtliche Auflösung der Strahlungsfelder EF1 - EF4 erzielt werden kann, d.h. die Strahlungsfelder EF1 - EF4 sind weitgehend voneinander entkoppelt.

In Figur 12 sind den Strahlungsfeldern EF1 - EF4 bzw. deren zugehörigen Lichtflecken LF1 - LF4 jeweils vier Meßzellen individuell zugeordnet. Mit anderen Worten heißt das, jedem zu messenden Lichtwellenleiter LW1 - LW4 sind jeweils vier einzelne, aktive Flächen zur Lichtaufnahme zugeordnet. Z.B. ist das lichtempfindliche Element LE1 also nochmals in vier z.B. streifenförmige Zellen LE11, LE12, LE13 und LE14 unterteilt. Ebenso sind die übrigen lichtempfindlichen Elementen LE2 - LE4 ausgebildet. Der Lichtfleck trifft also in einer Auskoppel- bzw. Empfangsebene x, y, d.h. in einer Ebene senkrecht zur Ausbreitungsrichtung des Strahlungsfeldes EF1, auf vier Meßzellen LE11 - LE14 auf, so daß sich eine verfeinerte, bzw. höher ortsaufgelöste Lichtaufnahme für den Lichtfleck LF1 ergibt. Entsprechende Koppelverhaltnisse ergeben sich auch für den Lichtfleck LF2 (und den übrigen Lichtflecken LF3 und LF4), der entkoppelt von den benachbarten Lichtflecken LF1 und LF3 von vier eigens zugeordneten Zellen LE21 - LE24 im lichtempfindlichen Element LE2 erfaßt wird.

Anstelle der Meßzeile SZ kann vorteilhaft auch ein Meßfeld bzw. Meß-Array vorgesehen sein. Dies ist beispielhaft mit der Unterteilung der Meßzeile SZ durch eine Trennlinie TL quer zu den streifenförmigen Zellen LE11 -LE14, LE21 - LE24, ... LE41 - LE44 angedeutet. Vorteilhaft eignen sich Meßzeilen mit 10 bis 2000 Elementen oder Arrays mit 10 bis 2000 mal 10 bis 2000 Elementen.

Die in den Figuren 10 mit 12 dargestellten Ausführungsbeispiele und die dazu getroffenen Aussagen beziehen sich zur besseren Veranschaulichung auf eine konkrete Zahl von Lichtwellenleitern und lichtempfindlichen Elementen (4 lichtempfindliche Elemente, 4 Lichtwellenleiter). Sie sind jedoch ohne Einschränkung auf beliebig viele, d.h. n-Lichtwellenleiter und m-lichtempfindliche Elemente übertragbar.

Die Figuren 13 und 14 zeigen in schematischer Darstellung beispielhaft als Mittel zur verbesserten Entkopplung benachbarter Strahlungsfelder ein optisches Abbildungsmittel bzw. eine Auskoppeloptik MSVG, die insbesondere ein dreigliedriges Linsensystem LI mit einer nachgeordneten Schlitzblende S1 enthält. In Figur 13 ist die Auskoppeloptik MSVG schematisch in einer Auskoppelebene x, z dargestellt, in der die Strahlungsvektoren der Strahlungsfelder etwa parallel nebeneinander liegen, wobei die Ausbreitungsrichtung der Strahlungsfelder in Richtung der z-Achse zeigt. Die Figur 13 stellt also in etwa eine Draufsicht der Koppelverhältnisse im optischen Empfänger OR7 von Figur 10 dar.

In die Koppeleinrichtung KR7 sind jetzt beispielhaft fünf Lichtwellenleiter LW11 - LW5 in Form einer Bandleitung BL71 eingelegt. Entlang der jeweiligen Lichtwellenleiter-Krümmungsabschnitte treten an Auskoppelstellen fünf Strahlungsfelder EF1 - EF5 aus den Lichtwellenleitern LW1 - LW5 aus. Die Strahlungsfelder EF1 - EF4 werden von der Auskoppeloptik MSVG entkoppelt voneinander auf die Meßzeile SZ abgebildet. Dabei werden die Strahlungsfelder EF1 - EF5 zweckmaßigerweise durch die Auskoppeloptik MSVG optisch vergrößert, vorzugsweise um den Faktor 3,5 (gerechnet von der Verbindungslinie VL der Lichtwellenleiter LW1 - LW5 zur Meßzeile SZ), um sie möglichst angepaßt an die Sensorelemente der Meßzeile SZ auf diese Sensorelemente abbilden zu können. Zur Entkopplung erfolgt die optische Formgebung für die Strahlungsfelder EF1 - EF5 derart, daß z.B. jeweils mindestens vier Zellen eines lichtempfindlichen Elements der Meßzeile SZ (analog zu Figur 12) jeweils ein Strahlungsfeld erfassen. Auf diese Weise können vorteilhaft die Intensitätswerte der Strahlungsfelder EF1 - EF5 stärker strahlender Nachbar-Lichtwellenleiter gegenüber denen stark gedämpfter Lichtwellenleiter herausgerechnet werden. Zweckmäßigerweise wird dazu jeweils der Kernstrahlungsbereich der Lichtwellenleiter LW1 - LW5 auf die Meßzeile SZ oder ggf. auf ein Array abgebildet.

In Figur 13 ist die Anordnung der Auskoppeloptik MSVG in der Schnittebene des Lichtwellenleiter-Bändchens BL71 dargestellt. In der linken Bildhälfte befindet sich die Meßzeile SZ oder ggf. auch ein Sensor-Array. Zweckmäßiger Weise werden die Lichtstrahlen der Strahlungsfelder EF1 - EF5 durch die Auskoppeloptik MSVG telezentrisch abgebildet, d.h. sie gehen nicht durch deren optische Achse. Zunächst gelangen die Strahlungsfelder EF1 - EF5 durch das dreigliedrige Linsensystem LI, dem die Schlitzblende S1 nachgeordnet ist. Das Linsensystem LI enthält zweckmäßigerweise ein monochromatisch korrigiertes Triplett aus hochbrechendem Schwerflint-Glas. Dieses Triplett hat vorzugsweise im Meß-Spektralbereich um 800 nm eine gute Transmission, flache Radien für geringe Wellenabrationen und eine geringe Restreflektion.

Durch die dem Linsensystem LI nachgeordnete Schlitzblende S1 wird erreicht, daß die unterschiedlichen Aperturen und Strahlungswinkel der Strahlungskeulen der Strahlungsfelder EF1 - EF5 optimal auf die Geometrie der Sensor- bzw. lichtempfindlichen Elemente der Meßzeile SZ bzw. ggf. des Arrays abgestimmt werden und somit die max. mögliche optische Leistung in deren Meßzellen eingekoppelt wird.

Beispielsweise wird als Meßzeile SZ in der linken Bildhälfte von Figur 13 ein Zeilensensor SZ mit 256 Elementen einer räumlichen Ausdehnung von etwa 50 µm x 2,5 mm Pixelgröße gewählt. Die Länge der Meßzeile SZ beträgt dann ca. 12,8 mm. Bei einem gewünschten Abbildungsmaßstab von 3,5 ist der dann durch die Auskoppeloptik MSVG abgebildete Objektbereich ca. 3,66 mm breit. In diesem Objektbereich befindet sich das Lichtwellenleiter-Bandchen BL71 mit z.B. etwa 3,2 mm Breite. In der Auskoppelebene x, z ist der Abstrahlwinkel der Strahlungsfelder EF1 - EF5 entsprechend der Lichtwellenleiter-Apertur von ca. 0,1 klein. Die Auskoppeloptik MSVG ist für dieses konkrete Berechnungs- bzw. Ausführungsbeispiel dann den Koppelverhältnissen derart angepaßt, daß die Strahlungsverteilungen der einzelnen Lichtwellenleiter LW1 - LW5 getrennt voneinander bzw. aufgespreizt auf die in diesem Schnittbild ungefähr 50 µm breiten Sensorelemente fallen. Da die Abstrahlungskegel bzw. Strahlungskeulen der Lichtwellenleiter LW1 - LW5 in etwa die gleiche Richtung haben (parallel zur optischen Systemachse) bildet die Auskoppeloptik MSVG die Strahlungsfelder EF1 - EF5 vorteilhaft telezentrisch ab.

Desweiteren sorgt die Schlitzblende S1 für einen an das jeweilige Ausführungsbeispiel angepaßten telezentrischen Strahlungsverlauf der Strahlungsfelder EF1 - EF5. zweckmaßigerweise ist die Durchlaßöffnung DU1 der Schlitzblende S1 derart gewählt, daß sich für das dreigliedrige Linsensystem LI eine vorgebbare Apertur einstellen läßt. In diesem Ausführungsbeispiel wird die Abbildungsoptik MSVG insbesondere die Schlitzblende S1 mit ihrer Öffnung DU1 derart den konkreten Koppelverhältnisse angepaßt, daß sich in der Auskoppelebene x, z eine geringe Abberation mit einem Streukreisdurchmesser vorzugsweise kleiner 70 µm auf der Sensorzeile SZ sowie eine Ortsauflösung in der Nähe der Sensor-Ortsfrequenz ergibt. Zudem bewirkt die Schlitzblende S1 in dieser Auskoppelebene x, z eine Ortsraumfilterung der Strahlungsfelder EF1 - EF5 und somit deren "Scharfstellung" bzw. die Beseitigung deren Randverzerrungen.

Figur 14 zeigt die Auskoppeloptik MSVG in einer Auskoppel- bzw. Schnittebene x, z senkrecht zur Zeichenebene von Figur 13. In dieser Schnittebene ist beispielhaft der Strahlengang des Strahlungsfeldes EF1 ausgehend vom Lichtwellenleiter LW1 eingezeichnet. Der Strahlengang des Strahlungsfeldes EF1 durchläuft hier zweckmäßiger Weise die optische Achse der Auskoppeloptik MSVG mittig, um die relativ große Apertur des Lichtwellenleiters LW1 in y-Richtung, d.h. senkrecht zur Ausbreitungsrichtung des Strahlungsfeldes EF1, auf ein Sensorelement abbilden zu können. Der Abstrahlwinkel ist in dieser Auskoppel- bzw. Biegungsebene y, z also relativ groß. Die Auskoppeloptik MSVG wird daher zweckmäßigerweise für die Strahlungsaufnahme in einem relativ großen Winkelbereich von mindestens ± 20°, vorzugsweise um ± 35° und max. ± 45° ausgelegt. In dieser Ebene x, z ist für die Sensorelemente der Meßzeile SZ zweckmaßigerweise eine Länge von 2,5 mm gewählt. Die Auskoppeloptik MSVG mit dem Linsensystem LI und der Schlitzblende S1 mit ihrer Durchlaßöffnung DU2 wird vorteilhaft so an die Gegebenheiten angepaßt, daß sich ein Streukreisdurchmesser höchstens von 2,5 mm ergibt, sowie eine hinreichend große Meßapertur (ca. 0,6) für einen ausreichenden Signalpegel auf dem jeweiligen lichtempfindlichen Element. Vorteilhaft ist dabei die Apertur der Auskoppeloptik MSVG mittels der Breite der Durchlaßöffnung DU2 einstellbar und hier entsprechend dem größeren Abstrahlwinkel des Lichtwellenleiters LW1 größer als die Schlitzbreite DU1 von Figur 13 gewählt.

Die Brennweite der Optik ist vorteilhaft so gewählt, daß sie für eine gute Korrigierbarkeit hinreichend groß ist, und der Abstand von der Auskoppelstelle bis zur Sensorzeile SZ bei einer Vergrößerung von etwa 3,5 unter 40 mm bleiben.

Auf diese Weise ist es vorteilhaft möglich, mit Hilfe der Auskoppeloptik MSVG auch eine größere Entfernung von den Auskoppelstellen der Strahlungsfelder EF1 - EF5 zur Meßzeile SZ zu überbrücken, wie sie z.B. durch ein Gehäuse, das die Koppeleinrichtung KR7 umgibt, vorgegeben sein kann. Die Mittel zur besseren Entkopplung benachbarter Strahlungsfelder werden dabei jeweils vorteilhaft an die Randbedingungen, wie sie z.B. durch den Abstand der Auskoppelstellen der Strahlungsfelder zur Meßzeile SZ, der Größe der lichtempfindlichen Elemente, dem Lichtwellenleiter-Abstand auf der Verbindungslinie VL im Lichtwellenleiter-Bandchen BL71, u.s.w. angepaßt.

Die Mittel zur verbesserten Entkopplung benachbarter Strahlungsfelder, hier speziell die Auskoppeloptik MSVG, sind insgesamt betrachtet so auszulegen, daß ein Objektbereich mit den an den Auskoppelstellen selektiv austretenden Strahlungsfeldern in einen vorgebbaren Bildbereich mit den lichtempfindlichen Elementen transformiert wird, wobei die Strahlungsfelder entkoppelt bleiben.

## Patentansprüche

1. Meßeinrichtung für mehrere Lichtwellenleiter mit einem optischen Empfänger (OR1), der eine Koppeleinrichtung (KR1) aufweist, die derart ausgebildet ist, daß mindestens zwei Lichtwellenleiter (LW1, LW2) in einer geordneten Struktur so nebeneinander einlegbar sind, daß sie eigenständige, nebeneinander liegende Strahlungsfelder (SF1, SF2) aufweisen, wobei in diesen Strahlungsfeldern (SF1, SF2) auszukoppelnder Sendesignale oder in einer Gruppe dieser Strahlungsfelder (SF1/SF2, SF3/SF4) jeweils mindestens ein lichtempfindliches Element (LE1, LE2) vorgesehen ist, wobei diese mindestens zwei lichtempfindlichen Elemente (LE1, LE2) bezüglich ihrer Empfangscharakteristika derart angeordnet und ausgerichtet sind, daß sie unterschiedliche Teile der genannten Strahlungsfelder (SF1, SF2) erfassen, und mit einer dem optischen Empfänger (OR1) zugeordneten Auswerteeinrichtung (AE1), in der die von den einzelnen lichtempfindlichen Elementen (LE1, LE2) aufgenommenen Meßsignale (RS1, RS2) der einzelnen Strahlungsfelder (SF1, SF2) getrennt auswertbar sind.

2. Meßeinrichtung nach Anspruch 1,
**dadurch gekennzeichnet,**
daß die Lichtwellenleiter (LW1, LW2) in der Koppeleinrichtung (KR1) parallel nebeneinander angeordnet sind.

3. Meßeinrichtung nach Anspruch 2,
**dadurch gekennzeichnet**,
daß die Lichtwellenleiter (LW1, LW2) mechanisch miteinander verbunden sind, vorzugsweise in Form einer Bandleitung (BL).

4. Meßeinrichtung nach einem der vorhergehenen Ansprüche,
**dadurch gekennzeichnet,**
daß in der Koppeleinrichtung (KR1) eine seitliche Führung für die nebeneinander einzulegenden Lichtwellenleiter (LW1, LW2) vorgesehen ist.

5. Meßeinrichtung nach einem der vorhergehenden Ansprüche,
**dadurch gekennzeichnet,**
daß die empfangsseitige Koppeleinrichtung (KR1) als Biegekoppler ausgebildet ist.

6. Meßeinrichtung nach Anspruch 5,
**dadurch gekennzeichnet,**
daß die Koppeleinrichtung (KR1) im Biegebereich der Lichtwellenleiter für alle Lichtwellenleiter (LW1, LW2) die gleiche Krümmung aufweist.

7. Meßeinrichtung nach einem der Ansprüche 1 bis 4,
**dadurch gekennzeichnet**,
daß die empfangsseitige Koppeleinrichtung durch die direkt an die Enden der Lichtwellenleiter (LW1 - LW4) angekoppelten lichtempfindlichen Elemente (LE1 - LE4) gebildet ist.

8. Meßeinrichtung nach einem der vorhergehenden Ansprüche,
**dadurch gekennzeichnet,**
daß der optische Sender (OT1) eine einzige Lichtquelle aufweist, an die alle zu messenden Lichtwellenleiter (LW1, LW2) gemeinsam angekoppelt sind.

9. Meßeinrichtung nach einem der Ansprüche 1 bis 7,
**dadurch gekennzeichnet**,
daß der optische Sender (OT1) für jeden anzukoppelnden Lichtwellenleiter (LW1, LW2) eine eigene Lichtquelle zur selektiven Lichteinkopplung aufweist.

10. Meßeinrichtung nach einem der vorhergehenden Ansprüche,
**dadurch gekennzeichnet**,
daß als Koppeleinrichtung (KT1) für den optischen Sender (OT1) ein Biegekoppler vorgesehen ist.

11. Meßeinrichtung nach einem der Ansprüche 1 bis 9,
**dadurch gekennzeichnet,**
daß an den offenen Stirnseiten der Lichtwellenleiter (LW1, LW2) eine Koppeleinrichtung (KT1) für den optischen Sender (OT1) vorgesehen ist.

12. Meßeinrichtung nach einem der vorhergehenden
Ansprüche, **dadurch gekennzeichnet,**
daß der optische Sender (OT1) als Sender für Nachrichtensignale ausgebildet ist.

13. Meßeinrichtung nach einem der Ansprüche 1 bis 11,
**dadurch gekennzeichnet,**
daß der optische Sender (OT1) als ein eigener Meßsender ausgebildet ist.

14. Meßeinrichtung nach einem der vorhergehenden Ansprüche,
**dadurch gekennzeichnet,**
daß die lichtempfindlichen Elemente (LE1 - LE4) auf einer gemeinsamen Unterlage (GU) angeordnet sind.

15. Meßeinrichtung nach einem der vorhergehenden Ansprüche,
**dadurch gekennzeichnet**,
daß die lichtempfindlichen Elemente (LE1 - LE4) in einer Zeilenstruktur oder in einer flächigen Arraystruktur angeordnet sind.

16. Meßeinrichtung nach einem der vorhergehenden Ansprüche,
**dadurch gekennzeichnet**,
daß jedem der lichtempfindlichen Elemente (LE1 - LE4) ein Ladungsverstärker zugeordnet ist.

17. Meßeinrichtung nach einem der vorhergehenden Ansprüche,
**dadurch gekennzeichnet,**
daß als lichtempfindliche Elemente (LE1 - LE4) Photo-Dioden vorgesehen sind.

18. Meßeinrichtung nach einem der Ansprüche 1 bis 16,
**dadurch gekennzeichnet,**
daß für die lichtempfindlichen Elemente (LE1 - LE4) CCD-Elemente vorgesehen sind.

19. Meßeinrichtung nach einem der vorhergehenden Ansprüche,
**dadurch gegennzeichnet,**
daß in der Koppeleinrichung (KR1) die Zentren der lichtempfindlichen Elemente (LE1, LE2) jeweils auf die zugehörigen Kerne der nebeneinander liegenden Lichtwellenleiter (LW1, LW2) ausgerichtet sind.

20. Meßeinrichtung nach einem der vorhergehenden Ansprüche,
**dadurch gekennzeichnet,**
daß die lichtempfindlichen Elemente (LE1, LE2) senkrecht zur Symmetrieachse (SA2) der Strahlungsfelder (SF1, SF2) angeordnet sind.

21. Meßeinrichtung nach einem der vorhergehenden Ansprüche,
**dadurch gekennzeichnet,**
daß eine Justierungsvorrichtung (JV) zur Optimierung der Zuordnung zwischen den lichtempfindlichen Elementen (LE1 - LE8) und den zugehörigen Strahlungsfeldern (SF1 - SF4) vorgesehen ist.

22. Meßeinrichtung nach einem der vorhergehenden Ansprüche,
**dadurch gekennzeichnet,**
daß bei mehr als zwei Lichtwellenleitern die Anzahl der lichtempfindlichen Elemente (LE1, LE2) kleiner als die Anzahl der nebeneinander liegenden Lichtwellenleiter (LW1 - LW4) gewählt ist.

23. Meßeinrichtung nach einem der Ansprüche 1 bis 21,
**dadurch gekennzeichnet,**
daß die Anzahl der lichtempfindlichen Elemente (LE1 - LE4) gleich der Anzahl der nebeneinander liegenden Lichtwellenleiter (LW1 - LW4) gewählt ist.

24. Meßeinrichtung nach einem der Ansprüche 1 bis 21,
**dadurch gekennzeichnet,**
daß die Anzahl der lichtempfindlichen Elemente (LE1 - LE8) größer als die Anzahl der nebeneinander liegenden Lichtwellenleiter (LW1 - LW4) gewählt ist, insbesondere mindestens fünfmal und vorzugsweise etwa einhundertmal größer.

25. Meßeinrichtung nach einem der vorhergehenden Ansprüche,
**dadurch gekennzeichnet,**
daß Blenden (BL1 - BL3) vorgesehen sind, und daß diese derart angeordnet sind, daß sie eine Entkopplung benachbarter Strahlungsfelder (SF1 - SF4) ergeben.

26. Meßeinrichtung nach Anspruch 25,
**dadurch gekennzeichnet,**
daß bei m lichtempfindlichen Elementen (LE1 - LEm) m-1 Blenden (BL1 - BLm-1) vorgesehen sind.

27. Meßeinrichtung nach Anspruch 25 oder 26,
**dadurch gekennzeichnet,**
daß die Blenden (BL1 - BL3) parallel zur Symmetrieebene (SA8) der Strahlungsfelder (SF1 - SF4) angeordnet sind.

28. Meßeinrichtung nach einem der vorhergehenden Ansprüche,
**dadurch gekennzeichnet,**
daß die Auswerteeinrichtung (AE6) Einrichtungen für den simultanen Echtzeitbetrieb aufweist.

29. Meßeinrichtung nach einem der vorhergehenden Ansprüche,
**dadurch gekennzeichnet,**
daß in der Auswerteeinrichtung (AE6) eine Ausleseeinrichtung (DAV) vorgesehen ist, die die von den lichtempfindlichen Elementen (LE1 - LE4) registrierten Meßsignale (RS1 - RS4) zeitlich abtastet.

30. Meßeinrichtung nach einem der vorhergehenden Ansprüche,
**dadurch gekennzeichnet,**
daß in der Auswerteeinrichtung eine Recheneinheit (CPU) mit Meßwertspeicher (MEM) vorgesehen ist, und daß die von den lichtempfindlichen Elementen (LE1 - LE4) registrierten Meßsignale derart funktional miteinander verknüpfbar sind, daß für jeden Lichtwellenleiter die zugehörigen optischen Kenngrößen selektiv auswertbar sind.

31. Meßeinrichtung nach einem der vorhergehenden Ansprüche,
**dadurch gekennzeichnet**,
daß die Meßeinrichtung (ME1) Bestandteil eines Lichtwellenleiter-Spleißgerätes ist.

32. Meßeinrichtung nach Anspruch 31,
**dadurch gekennzeichnet,**
daß Mittel zum Ausrichten der nebeneinander liegenden Lichtwellenleiter (LW1, LW2) an der Spleißstelle (MSE1) vorgesehen sind.

33. Meßeinrichtung nach Anspruch 32,
**dadurch gekennzeichnet,**
daß die Mittel (SG1, SG2) zum Ausrichten der nebeneinander liegenden Lichtwellenleiter (LW1, LW2) an der Spleißstelle (MSE1) von Auswertesignalen der Auswerteeinrichtung (AE1) getrennt ansteuerbar sind.

34. Meßeinrichtung nach einem der Ansprüche 1 bis 30,
**dadurch gekennzeichnet,**
daß die Meßeinrichtung (ME1) Bestandteil eines Lichtwellenleiter-Dämpfungsmeßgerätes ist.

35. Meßeinrichtung nach einem der vorhergehenden Ansprüche,
**dadurch gekennzeichnet,**
daß zwischen Auskoppelstellen der Lichtwellenleiter (z.B. LW1, LW2) und den lichtempfindlichen Elementen (z.B. LE1, LE2) Mittel (z.B. MSV1, MSV2) vorgesehen sind, die eine vergrößerte Entkopplung benachbarter Strahlungsfelder (z.B. EF1, EF2) bewirken.

36. Meßeinrichtung nach einem der vorhergehenden Ansprüche
**dadurch gekennzeichnet,**
daß die Strahlungsfelder (z.B. EF1, EF2) quer zur Verbindungslinie der Lichtwellenleiter (z.B. LW1, LW2) jeweils eine größere Ausdehnung aufweisen als entlang deren Verbindungslinie (VL).

37. Meßeinrichtung nach einem der vorhergehenden Ansprüche,
**dadurch gekennzeichnet,**
daß zwischen einer Auskoppelstelle der Strahlungsfelder (z.B. EF1, EF2) aus den Lichtwellenleitern (z.B. LW1, LW2) und den zugeordneten lichtempfindlichen Elementen (z.B. LE1, LE2) Mittel (z.B. MSV1, MSV2) vorgesehen sind, welche jeweils die Ausdehnung der Strahlungsfelder (z.B. EF1, EF2) in einer Richtung (y) quer zur Verbindungslinie (VL) der Lichtwellenleiter (z.B. LW1, LW2)vergrößern.

38. Meßeinrichtung nach Anspruch 37,
**dadurch gekennzeichnet,**
daß die Verbreiterung in der Richtung (y) quer zur Verbindungslinie (VL) der Lichtwellenleiter (z.B. LW1, LW2) um mindestens den Faktor 2 vorgenommen wird.

39. Meßeinrichtung nach einem der vorhergehenden Ansprüche,
**dadurch gekennzeichnet,**
daß zwischen einer Auskoppelstelle der Lichtwellenleiter (z.B. LW1, LW2) und den zugeordneten lichtempfindlichen Elementen (z.B. LE1, LE2) Mittel (z.B. MSV1, MSV2) vorgesehen sind, die die Strahlungsfelder (z.B. EF1, EF2) im Bereich der lichtempfindlichen Elemente (z.B. LE1, LE2) in eine Richtung (x) entlang der Verbindungslinie (VL) der Lichtwellenleiter (z.B. LW1, LW2) jeweils verschmälern.

40. Meßeinrichtung nach einem der vorhergehenden Ansprüche,
**dadurch gekennzeichnet,**
daß jeweils von den Strahlungsfeldern (z.B. EF1, EF2) im Bereich der lichtempfindlichen Elemente (z.B. LE1, LE2) gebildete Leuchtflecke (z.B. LF1, LF2) in Richtung (y) quer zur Verbindungslinie (VL) der Lichtwellenleiter (z.B. LW1, LW2) größer sind, insbesondere mindestens zweimal so groß, als in Richtung (x) der Verbindungslinie (VL) der Lichtwellenleiter (z.B. LW1, LW2).

41. Meßeinrichtung nach einem der vorhergehenden Ansprüche,
**dadurch gekennzeichnet,**
daß zwischen einer Auskoppelstelle der Lichtwellenleiter (z.B. LW1, LW2) und den lichtempfindlichen Elementen (z.B. LE1, LE2) eine Auskoppeloptik (z.B. MSVG) vorgesehen ist.

42. Meßeinrichtung nach Anspruch 41,
**dadurch gekennzeichnet,**
daß die Auskoppeloptik (z.B. MSVG) ein monochromatisch korrigiertes Triplett enthält.

43. Meßeinrichtung nach einem der Ansprüche 41 oder 42,
**dadurch gekennzeichnet,**
daß die Auskoppeloptik (z.B. MSVG) aus hochbrechendem Schwerflint-Glas hergestellt ist bzw. dieses enthält.

44. Meßeinrichtung nach einem der Ansprüche 41 bis 43,
**dadurch gekennzeichnet,**
daß die Auskoppeloptik (z.B. MSVG) für einen Winkelbereich von mindestens ± 20°, vorzugsweise um ± 35° und max. ± 45° ausgelegt ist.

45. Meßeinrichtung nach einem der Ansprüche 41 bis 44,
**dadurch gekennzeichnet**,
daß die Auskoppeloptik (z.B. MSVG) quer zur Verbindungslinie (VL) der Lichtwellenleiter (z.B. LE1, LE2) eine größere Apertur als entlang deren Verbindungslinie (VL) aufweist.

46. Meßeinrichtung nach einem der vorhergehenden Ansprüche,
**dadurch gekennzeichnet,**
daß jeweils ein im Bereich der lichtempfindlichen Elemente (z.B. LE1, LE2) für jedes Strahlungsfeld (z.B. EF1, EF2) erzeugter Leuchtfleck (z.B. LF1, LF2) etwa eine Streifenform aufweist.

47. Meßeinrichtung nach einem der Ansprüche 1 bis 45,
**dadurch gekennzeichnet,**
daß jeweils ein im Bereich der lichtempfindlichen Elemente (z.B. LE1, LE2) für jedes Strahlungsfeld (z.B. EF1, EF2) erzeugter Leuchtfleck (z.B. LF1, LF2) eine etwa elliptische Form aufweist.

48. Meßeinrichtung nach einem der vorhergehenden Ansprüche,
**dadurch gekennzeichnet,**
daß jeweils Ausdehnung der Strahlungsfelder (z.B. EF1, EF2) in Richtung (y) quer zur Verbindungslinie (VL) der Lichtwellenleiter (z.B. LW1, LW2) so gewählt ist, daß jeweils die Ausdehnung deren zugeordneter Leuchtflecke (z.B. LF1, LF2) etwa der Ausdehnung der lichtempfindlichen Elemente (z.B. LE1, LE2) in dieser Richtung (y) entspricht.

49. Meßeinrichtung nach einem der vorhergehenden Ansprüche,
**dadurch gekennzeichnet**,
daß jeweils die Ausdehnung der Strahlungsfelder (z.B. EF1, EF2) in Richtung (x) der Verbindungslinie (VL) der Lichtwellenleiter (z.B. LW1, LW2) so klein gewählt ist, daß sich jeweils im Bereich der Empfangselemente (z.B. LE1, LE2) benachbarte Leuchtflecke (z.B. LF1, LF2) nicht oder nur möglichst wenig überlappen.

50. Meßeinrichtung nach einem der vorhergehenden Ansprüche,
**dadurch gekennzeichnet,**
daß zwischen der Auskoppelstelle und den lichtempfindlichen Elementen (z.B. LE1, LE2) eine Schlitzblende (S1) vorgesehen ist.

51. Meßeinrichtung nach einem der vorhergehenden Ansprüche,
**dadurch gekennzeichnet,**
daß zwischen Auskoppelstellen der Lichtwellenleiter (z.B. LW1, LW2) und den lichtempfindlichen Elementen (z.B. LE1, LE2) optische Abbildungsmittel vorgesehen sind, deren Abbildungscharakteristik so gewählt ist, daß die Entkopplung benachbarter Strahlungsfelder (z.B. EF1, EF2) verbessert ist.

52. Meßeinrichtung nach Anspruch 51,
**dadurch gekennzeichnet,**
daß die Abbildung der Strahlungsfelder (z.B. EF1, EF2) mittels eines Hologramms derart vorgenommen ist, daß eine Verbesserung der Entkopplung benachbarter Strahlungsfelder (z.B. EF1, EF2) im Bereich der lichtempfindlichen Elemente (z.B. LE1, LE2) eintritt.

53. Meßeinrichtung nach Anspruch 51,
**dadurch gekennzeichnet,**
daß die Abbildung der Strahlungsfelder (z.B. EF1, EF2) mittels einer Bragg-Zelle derart vorgenommen ist, daß eine Verbesserung der Entkopplung benachbarter Strahlungsfelder (z.B. EF1, EF2) im Bereich der lichtempfindlichen Elemente (z.B. LE1, LE2) eintritt.

54. Meßeinrichtung für mehrere Lichtwellenleiter, insbesondere nach einem der vorhergehenden Ansprüche, mit einem optischen Empfänger (OR1), der eine Koppeleinrichtung (KR1) aufweist, die derart ausgebildet ist, daß mindestens zwei Lichtwellenleiter (LW1, LW2) in einer geordneten Struktur so nebeneinander einlegbar sind, daß sie eigenständige, nebeneinander liegende Strahlungsfelder (SF1, SF2) aufweisen, wobei der optische Empfänger (OR7) derart ausgebildet ist, daß in diesen Strahlungsfeldern (SF1, SF2) auszukoppelnder Sendesignale oder in einer Gruppe dieser Strahlungsfelder (SF1/SF2, SF3/SF4) jeweils mindestens ein lichtempfindliches Element (z.B. LE1) relativ gegenüber den zu messenden Lichtwellenleitern (z.B. LW1, LW2) quer zur Ausbreitungsrichtung der Strahlungsfelder (z.B. EF1, EF2) verschiebbar angeordnet ist, und mit einer dem optischen Empfänger (OR1) zugeordneten Auswerteeinrichtung (AE1), in der die von dem lichtempfindlichen Element (z.B. LE1) aufgenommenen Meßsignale (RS1, RS2) der einzelnen Strahlungsfelder (SF1, SF2) getrennt auswertbar sind.

55. Meßeinrichtung für mehrere Lichtwellenleiter, insbesondere nach einem der vorhergehenden Ansprüche, mit einem optischen Empfänger (OR1), der eine Koppeleinrichtung (KR1) aufweist, die derart ausgebildet ist, daß mindestens zwei Lichtwellenleiter (LW1, LW2) in einer geordneten Struktur so nebeneinander einlegbar sind, daß sie eigenständige, nebeneinander liegende Strahlungsfelder (SF1, SF2) aufweisen, wobei der optische Empfänger (OR7) derart ausgebildet ist, daß dessen Koppeleinrichtung (KR7) mit den zu messenden Lichtwellenleitern (z.B. LW1, LW2) relativ gegenüber mindestens einem lichtempfindlichen Element (z.B. LE1) quer zur Ausbreitungsrichtung der Strahlungsfelder (z.B. EF1, EF2) verschiebbar angeordnet ist, so daß diesen Strahlungsfeldern (SF1, SF2) auszukoppelnder Sendesignale oder einer Gruppe dieser Strahlungsfelder (SF1/SF2, SF3/SF4) jeweils mindestens ein lichtempfindliches Element (z.B. LE1) zugeordnet ist, und mit einer dem optischen Empfänger (OR1) zugeordneten Auswerteeinrichtung (AE1) in der die von dem lichtempfindlichen Element (z.B. LE1) aufgenommenen Meßsignale (RS1, RS2) der einzelnen Strahlungsfelder (SF1, SF2) getrennt auswertbar sind.

56. Meßverfahren, wobei mindestens zwei Lichtwellenleiter (LW1, LW2) in eine Koppeleinrichtung (KR1) eines optischen Empfängers (OR1) in einer geordneten Struktur so nebeneinander eingelegt werden, daß eigenständige, nebeneinanderliegende Strahlungsfelder (SF1, SF2) gebildet werden, wobei in diesen Strahlungsfeldern (SF1, SF2) auszukoppelnder Sendesignale oder in einer Gruppe dieser Strahlungsfelder (SF1/SF2, SF3/SF4) jeweils mindestens ein lichtempfindliches Element (SE1, SE2) vorgesehen wird, wobei diese mindestens zwei lichtempfindlichen Elemente (LE1, LE2) bezüglich ihrer Empfangscharakteristika gegenüber den Strahlungsfeldern (SF1, SF2) derart ausgerichtet werden, daß von diesen mindestens zwei lichtempfindlichen Elementen (LE1, LE2) unterschiedliche Teile der genannten Strahlungsfelder erfaßt werden, und wobei von den lichtempfindlichen Elementen (LE1, LE2) selektive Meßsignale (RS1, RS2), die den jeweiligen Strahlungsfeldern (SF1, SF2) entsprechen, empfangen und anschließend getrennt ausgewertet werden.

57. Verfahren nach Anspruch 56,
**dadurch gekennzeichnet**,
daß die von den einzelnen lichtempfindlichen Elementen (LE1 - LE4) aufgenommenen Meßsignale (RS1 - RS4) der einzelnen Strahlungsfelder (SF1 - SF4) im Zeitmultiplexbetrieb sequentiell nacheinander ausgelesen werden und als Meßsignale anschließend abgespeichert werden.

58. Verfahren nach einem der vorhergehenden Ansprüche,
**dadurch gekennzeichnet,**
daß die Strahlungsfelder (z.B. EF1, EF2) mit vergrößerter gegenseitiger Entkopplung auf die lichtempfindlichen Elemente (z.B. LE1, LE2) abgebildet werden.

## Claims

1. Test device for a plurality of optical waveguides having an optical receiver (OR1) which exhibits a coupling device (KR1) which is designed in such a manner that at least two optical waveguides (LW1, LW2) are insertable alongside one another in an ordered structure so that they exhibit independent radiation fields (SF1, SF2) lying alongside one another, in these radiation fields (SF1, SF2) of emission signals to be coupled out or in a group of these radiation fields (SF1/SF2, SF3/SF4) in each case at least one light-sensitive element (LE1,LE2) being provided, these at least two light-sensitive elements (LE1, LE2) being disposed and aligned with respect to their reception characteristics in such a manner that they pick up different parts of said radiation fields (SF1, SF2), and having an evaluating device (AE1), which is associated with the optical receiver (OR1) and in which those test signals (RS1, RS2) of the individual radiation fields (SF1, SF2) which are recorded by the individual light-sensitive elements (LE1, LE2) are separately evaluatable.

2. Test device according to Claim 1, characterized in that the optical waveguides (LW1, LW2) are disposed parallel alongside one another in the coupling device (KR1).

3. Test device according to Claim 2, characterized in that the optical waveguides (LW1, LW2) are mechanically connected to one another, preferably in the form of a strip line (BL).

4. Test device according to one of the preceding claims, characterized in that a lateral guidance for the optical waveguides (LW1, LW2) to be inserted alongside one another is provided in the coupling device (KR1).

5. Test device according to one of the preceding claims, characterized in that the reception-side coupling device (KR1) is designed as a flexural coupler.

6. Test device according to Claim 5, characterized in that the coupling device (KR1) in the flexing region of the optical waveguides exhibits the same curvature for all optical waveguides (LW1, LW2).

7. Test device according to one of Claims 1 to 4, characterized in that the reception-side coupling device is formed by the light-sensitive elements (LE1 - LE4) coupled directly onto the ends of the optical waveguides (LW1 - LW4).

8. Test device according to one of the preceding claims, characterized in that the optical emitter (OT1) exhibits a single light source to which all the optical waveguides (LW1, LW2) to be tested are coupled in common.

9. Test device according to one of Claims 1 to 7, characterized in that the optical emitter (OT1) exhibits, for each optical waveguide (LW1, LW2) to be coupled on, a specifically associated light source for selective coupling-in of light.

10. Test device according to one of the preceding claims, characterized in that a flexural coupler is provided as coupling device (KT1) for the optical emitter (OT1).

11. Test device according to one of Claims 1 to 9, characterized in that a coupling device (KT1) for the optical emitter (OT1) is provided at the open end faces of the optical waveguides (LW1, LW2).

12. Test device according to one of the preceding claims, characterized in that the optical emitter (OT1) is designed as emitter for message signals.

13. Test device according to one of Claims 1 to 11, characterized in that the optical emitter (OT1) is designed as a specifically associated test emitter.

14. Test device according to one of the preceding claims, characterized in that the light-sensitive elements (LE1 - LE4) are disposed on a common base (GU).

15. Test device according to one of the preceding claims, characterized in that the light-sensitive elements (LE1 - LE4) are disposed in a line structure or in a laminar array structure.

16. Test device according to one of the preceding claims, characterized in that a charge amplifier is associated with each one of the light-sensitive elements (LE1 - LE4).

17. Test device according to one of the preceding claims, characterized in that photodiodes are provided as light-sensitive elements (LE1 - LE4).

18. Test device according to one of Claims 1 to 16, characterized in that CCD elements are provided for the light-sensitive elements (LE1 - LE4).

19. Test device according to one of the preceding claims, characterized in that in the coupling device (KR1) the centres of the light-sensitive elements (LE1, LE2) are aligned in each instance with respect to the pertinent cores of the optical waveguides (LW1, LW2) lying alongside one another.

20. Test device according to one of the preceding claims, characterized in that the light-sensitive elements (LE1, LE2) are disposed perpendicular to the axis of symmetry (SA2) of the radiation fields (SF1, SF2).

21. Test device according to one of the preceding claims, characterized in that an adjustment device (JV) is provided for the optimization of the association between the light-sensitive elements (LE1 - LE8) and the associated radiation fields (SF1 - SF4).

22. Test device according to one of the preceding claims, characterized in that in the case of more than two optical waveguides the number of light-sensitive elements (LE1, LE2) is selected to be smaller than the number of optical waveguides (LW1 - LW4) lying alongside one another.

23. Test device according to one of Claims 1 to 21, characterized in that the number of light-sensitive elements (LE1 - LE4) is selected to be equal to the number of optical waveguides (LW1 - LW4) lying alongside one another.

24. Test device according to one of Claims 1 to 21, characterized in that the number of light-sensitive elements (LE1 - LE8) is selected to be larger than the number of optical waveguides (LW1 - LW4) lying alongside one another, in particular at least five times and preferably approximately one hundred times larger.

25. Test device according to one of the preceding claims, characterized in that shields (BL1 - BL3) are provided, and in that these are disposed in such a manner that they give a decoupling of adjacent radiation fields (SF1 - SF4).

26. Test device according to Claim 25, characterized in that with m light-sensitive elements (LE1 - LEm) m-1 shields (BL1 - BLm-1) are provided.

27. Test device according to Claim 25 or 26, characterized in that the shields (BL1 - BL3) are disposed parallel to the plane of symmetry (SA8) of the radiation fields (SF1 - SF4).

28. Test device according to one of the preceding claims, characterized in that the evaluating device (AE6) exhibits devices for simultaneous real-time operation.

29. Test device according to one of the preceding claims, characterized in that in the evaluating device (AE6) a readout device (DAV) is provided, which temporally samples the test signals (RS1 - RS4) recorded by the light-sensitive elements (LE1 - LE4).

30. Test device according to one of the preceding claims, characterized in that in the evaluating device a computer unit (CPU) with a test value memory (MEM) is provided, and in that the test signals recorded by the light-sensitive elements (LE1 - LE4) can be functionally linked with one another in such a manner that for each optical waveguide the associated optical characteristic quantities are selectively evaluatable.

31. Test device according to one of the preceding claims, characterized in that the test device (ME1) is a component part of an optical waveguide splice device.

32. Test device according to Claim 31, characterized in that means are provided for the alignment of the optical waveguides (LW1, LW2) lying alongside one another at the splice location (MSE1).

33. Test device according to Claim 32, characterized in that the means (SG1, SG2) for the alignment of the optical waveguides (LW1, LW2) lying alongside one another at the splice location (MSE1) are separately drivable by evaluation signals of the evaluating device (AE1).

34. Test device according to one of Claims 1 to 30, characterized in that the test device (ME1) is a component part of an optical waveguide attenuation test device.

35. Test device according to one of the preceding claims, characterized in that between coupling- out positions of the optical waveguides (e.g. LW1, LW2) and the light-sensitive elements (e.g. LE1, LE2) means (e.g. MSV1, MSV2) are provided, which effect an enhanced decoupling of adjacent radiation fields (e.g. EF1, EF2).

36. Test device according to one of the preceding claims, characterized in that the radiation fields (e.g. EF1, EF2) exhibit transversely to the connecting line of the optical waveguides (e.g. LW1, LW2) in each instance a greater spread than along their connecting line (VL).

37. Test device according to one of the preceding claims, characterized in that between a coupling-out position of the radiation fields (e.g. EF1, EF2) out of the optical waveguides (e.g. LW1, LW2) and the associated light-sensitive elements (e.g. LE1, LE2) means (e.g. MSV1, MSV2) are provided, which enhance in each instance the spread of the radiation fields (e.g. EF1, EF2) in a direction (y) transverse to the connecting line (VL) of the optical waveguides (e.g. LW1, LW2).

38. Test device according to Claim 37, characterized in that the broadening in the direction (y) transverse to the connecting line (VL) of the optical waveguides (e.g. LW1, LW2) is undertaken by at least the factor 2.

39. Test device according to one of the preceding claims, characterized in that between a coupling-out position of the optical waveguides (e.g. LW1, LW2) and the associated light-sensitive elements (e.g. LE1, LE2) means (e.g. MSV1, MSV2) are provided which narrow in each instance the radiation fields (e.g. EF1, EF2) in the region of the light-sensitive elements (e.g. LE1, LE2) in a direction (x) along the connecting line (VL) of the optical waveguides (e.g. LW1, LW2).

40. Test device according to one of the preceding claims, characterized in that illuminated spots (e.g. LF1, LF2), formed in each instance by the radiation fields (e.g. EF1, EF2) in the region of the light-sensitive elements (e.g. LE1, LE2), are larger in the direction (y) transverse to the connecting line (VL) of the optical waveguides (e.g. LW1, LW2), in particular at least twice as large, as compared with in the direction (x) of the connecting line (VL) of the optical waveguides (e.g. LW1, LW2).

41. Test device according to one of the preceding claims, characterized in that a coupling-out optical system (e.g. MSVG) is provided between a coupling-out position of the optical waveguides (e.g. LW1, LW2) and the light-sensitive elements (e.g. LE1, LE2).

42. Test device according to Claim 41, characterized in that the coupling-out optical system (e.g. MSVG) includes a monochromatically corrected triplet.

43. Test device according to one of Claims 41 and 42, characterized in that the coupling-out optical system (e.g. MSVG) is produced from high-refractive-index heavy flint glass or includes the latter.

44. Test device according to one of Claims 41 to 43, characterized in that the coupling-out optical system (e.g. MSVG) is designed for an angular range of at least ± 20°, preferably ± 35° and, as a maximum, ± 45°.

45. Test device according to one of Claims 41 to 44, characterized in that the coupling-out optical system (e.g. MSVG) exhibits a larger aperture transversely to the connecting line (VL) of the optical waveguides (e.g. LE1, LE2) than along their connecting line (VL).

46. Test device according to one of the preceding claims, characterized in that in each instance an illuminated spot (e.g. LF1, LF2) generated in the region of the light-sensitive elements (e.g. LE1, LE2) for each radiation field (e.g. EF1, EF2) exhibits approximately a strip shape.

47. Test device according to one of Claims 1 to 45, characterized in that in each instance an illuminated spot (e.g. LF1, LF2) generated in the region of the light-sensitive elements (e.g. LE1, LE2) for each radiation field (e.g. EF1, EF2) exhibits an approximately elliptical shape.

48. Test device according to one of the preceding claims, characterized in that in each instance the spread of the radiation fields (e.g. EF1, EF2) in direction (y) transverse to the connecting line (VL) of the optical waveguides (e.g. LW1, LW2) is selected so that in each instance the spread of their associated illuminated spots (e.g. LF1, LF2) approximately corresponds to the spread of the light-sensitive elements (e.g. LE1, LE2) in this direction (y).

49. Test device according to one of the preceding claims, characterized in that in each instance the spread of the radiation fields (e.g. EF1, EF2) in direction (x) of the connecting line (VL) of the optical waveguides (e.g. LW1, LW2) is selected to be so small that in each instance in the region of the reception elements (e.g. LE1, LE2) adjacent illuminated spots (e.g. LF1, LF2) do not overlap or overlap only as little as possible.

50. Test device according to one of the preceding claims, characterized in that a slot diaphragm (S1) is provided between the coupling-out position and the light-sensitive elements (e.g. LE1, LE2).

51. Test device according to one of the preceding claims, characterized in that between coupling-out positions of the optical waveguides (e.g. LW1, LW2) and the light-sensitive elements (e.g. LE1, LE2) optical imaging means are provided, the imaging characteristic of which is selected so that the decoupling of adjacent radiation fields (e.g. EF1, EF2) is improved.

52. Test device according to Claim 51, characterized in that the imaging of the radiation fields (e.g. EF1, EF2) is undertaken by means of a hologram in such a manner that an improvement of the decoupling of adjacent radiation fields (e.g. EF1, EF2) takes place in the region of the light-sensitive element (e.g. LE1, LE2).

53. Test device according to Claim 51, characterized in that the imaging of the radiation fields (e.g. EF1, EF2) is undertaken by means of a Bragg cell in such a manner that an improvement of the decoupling of adjacent radiation fields (e.g. EF1, EF2) takes place in the region of the light-sensitive elements (e.g. LE1, LE2).

54. Test device for a plurality of optical waveguides, in particular according to one of the preceding claims, having an optical receiver (OR1) which exhibits a coupling device (KR1) which is designed in such a manner that at least two optical waveguides (LW1, LW2) are insertable alongside one another in an ordered structure so that they exhibit independent radiation fields (SF1, SF2) lying alongside one another, the optical receiver (OR7) being designed in such a manner that in these radiation fields (SF1, SF2) of emission signals to be coupled out or in a group of these radiation fields (SFI/SF2, SF3/SF4) in each case at least one light-sensitive element (e.g. LE1) is disposed to be displaceable relative to the optical waveguides (e.g. LW1, LW2) to be tested, transversely to the direction of propagation of the radiation fields (e.g. EF1, EF2), and having an evaluating device (AE1), which is associated with the optical receiver (OR1) and in which those test signals (RS1, RS2) of the individual radiation fields (SF1, SF2) which are recorded by the light-sensitive element (e.g. LE1) are separately evaluatable.

55. Test device for a plurality of optical waveguides, in particular according to one of the preceding claims, having an optical receiver (OR1) which exhibits a coupling device (KR1) which is designed in such a manner that at least two optical waveguides (LW1, LW2) are insertable alongside one another in an ordered structure so that they exhibit independent radiation fields (SF1, SF2) lying alongside one another, the optical receiver (OR7) being designed in such a manner that its coupling device (KR7) with the optical waveguides ie.g. LW1, LW2) to be tested is disposed to be displaceable relative to at least one light-sensitive element (e.g. LE1) transversely to the direction of propagation of the radiation fields (e.g. EF1, EF2) so that in each case at least one light-sensitive element (e.g. LE1) is associated with these radiation fields (SF1, SF2) of emission signals to be coupled out or with a group of these radiation fields (SF1/SF2, SF3/SF4), and having an evaluating device (AE1), which is associated with the optical receiver (OR1) and in which those test signals (RS1, RS2) of the individual radiation fields (SF1, SF2) which are recorded by the light-sensitive element (e.g. LE1) are separately evaluatable.

56. Test method, at least two optical waveguides (LW1, LW2) being inserted alongside one another into a coupling device (KR1) of an optical receiver (OR1) in an ordered structure so that independent radiation fields (SF1, SF2) lying alongside one another are formed, in these radiation fields (SF1, SF2) of emission signals to be coupled out or in a group of these radiation fields (SF1/sF2, sF3/sF4) in each case at least one light-sensitive element (SE1, SE2) being provided, these at least two light-sensitive elements (LE1, LE2) being aligned with respect to their reception characteristics in relation to the radiation fields (SF1, SF2) in such a manner that by these at least two light-sensitive elements (LE1, LE2) different parts of said radiation fields are picked up, and by the light-sensitive elements (LE1, LE2) selective test signals (RS1, RS2), which correspond to the respective radiation fields (SF1, SF2), being received and subsequently separately evaluated.

57. Method according to Claim 56, characterized in that those test signals (RS1 - RS4) of the individual radiation fields (SF1 - SF4) which are recorded by the individual light-sensitive elements (LE1 - LE4) are read out sequentially in succession in time-division multiplex operation and are subsequently stored as test signals.

58. Method according to one of the preceding claims, characterized in that the radiation fields (e.g. EF1, EF2) are imaged with enhanced mutual decoupling onto the light-sensitive elements (e.g. LE1, LE2).

## Revendications

1. Dispositif de mesure de plusieurs guides d'ondes lumineuses, comportant un récepteur optique (OR1), qui comporte un dispositif (KR1) de couplage formé de telle sorte qu'au moins deux guides (LW1, LW2) d'ondes lumineuses puissent être insérés l'un à côté de l'autre dans une structure ordonnée, si bien qu'ils comportent des champs (SF1, SF2) de rayonnement indépendants se trouvant l'un à côté de l'autre, au moins un élément (LE1, LE2) sensible à la lumière étant prévu dans ces champs (SF1, SF2) de rayonnement de signaux d'émission à sortir ou dans un groupe de ces champs (SF1/SF2, SF3/SF4) de rayonnement, et ces au moins deux éléments (LE1, LE2) sensibles à la lumière étant disposés et orientés, en ce qui concerne leurs caractéristiques de réception, de telle sorte qu'ils détectent des parties différentes desdits champs (SF1, SF2) de rayonnement, et comportant un dispositif (AE1) d'exploitation, qui est associé au récepteur optique (OR1) et dans lequel les signaux (RS1, RS2) de mesure, reçus par les divers éléments sensibles à la lumière (LE1, LE2), des divers champs (SF1, SF2) de rayonnement peuvent être exploités séparément.

2. Dispositif de mesure suivant la revendication 1,
caractérisé en ce que
les guides (LW1, LW2) d'ondes lumineuses sont disposés l'un à côté de l'autre en parallèle dans le dispositif (KR1) de couplage.

3. Dispositif de mesure suivant la revendication 2,
caractérisé en ce que
les guides (LW1, LW2) d'ondes lumineuses sont reliés l'un à l'autre mécaniquement, de préférence sous forme d'une bande (BL).

4. Dispositif de mesure selon l'une des revendications précédentes,
caractérisé en ce que
il est prévu dans le dispositif (KR1) de couplage un guidage latéral des guides (LW1, LW2) d'ondes lumineuses à insérer l'un à côté de l'autre.

5. Dispositif de mesure suivant l'une des revendications précédentes,
caractérisé en ce que
le dispositif (KR1) de couplage du côté réception est sous forme de coupleur courbé.

6. Dispositif de mesure suivant la revendications 5,
caractérisé en ce que
le dispositif (KR1) de couplage a dans la zone de courbure des guides d'ondes lumineuses la même courbure pour tous les guides (LW1, LW2) d'ondes lumineuses.

7. Dispositif de mesure suivant l'une des revendications 1 à 4,
caractérisé en ce que
le dispositif de couplage du côté réception est formé par les éléments (LE1 à LE4) sensibles à la lumière couplés directement aux extrémités des guides (LW1 à LW4) d'ondes lumineuses.

8. Dispositif de mesure suivant l'une des revendications précédentes,
caractérisé en ce que
l'émetteur optique (OT1) comporte une seule source de lumière, à laquelle tous les guides (LW1, LW2) d'ondes lumineuses à mesurer sont couplés en commun.

9. Dispositif de mesure suivant l'une des revendications 1 à 7,
caractérisé en ce que
l'émetteur optique (OT1) comporte une source de lumière destinée à émettre de manière sélective de la lumière et propre à chaque guide (LW1, LW2) d'ondes lumineuses à coupler.

10. Dispositif de mesure suivant l'une des revendications précédentes,
caractérisé en ce que
il est prévu comme dispositif (KT1) de couplage pour l'émetteur optique (OT1) un coupleur courbé.

11. Dispositif de mesure suivant l'une des revendications 1 à 9,
caractérisé en ce que
il est prévu aux côtés frontaux ouverts des guides (LW1, LW2) d'ondes lumineuses un dispositif (KT1) de couplage pour l'émetteur optique (OT1).

12. Dispositif de mesure suivant l'une des revendications précédentes,
caractérisé en ce que
l'émetteur optique (OT1) est sous forme d'émetteur de signaux d'information.

13. Dispositif de mesure suivant l'une des revendications 1 à 11,
caractérisé en ce que
l'émetteur optique (OT1) est sous la forme d'un générateur de signaux proprement dit.

14. Dispositif de mesure suivant l'une des revendications précédentes,
caractérisé en ce que
les éléments (LE1 à LE4) sensibles à la lumière sont disposés sur une couche (GU) commune.

15. Dispositif de mesure suivant l'une des revendications précédentes,
caractérisé en ce que
les éléments (LE1 à LE4) sensibles à la lumière sont disposés dans une structure de lignes ou dans une structure de réseau surfacique.

16. Dispositif de mesure suivant l'une des revendications précédentes,
caractérisé en ce que
un amplificateur de charge est associé à chacun des éléments (LE1 à LE4) sensibles à la lumière.

17. Dispositif de mesure suivant l'une des revendications précédentes,
caractérisé en ce que
il est prévu comme éléments (LE1 à LE4) sensibles à la lumière des photodiodes.

18. Dispositif de mesure suivant l'une des revendications 1 à 16,
caractérisé en ce que
il est prévu pour les éléments (LE1 à LE4) sensibles à la lumière des éléments CCD.

19. Dispositif de mesure suivant l'une des revendications précédentes,
caractérisé en ce que
dans le dispositif (KR1) de couplage les centres des éléments (LE1, LE2) sensibles à la lumière sont alignés sur les coeurs associés des guides (LW1, LW2) d'ondes lumineuses se trouvant l'un à côté de l'autre.

20. Dispositif de mesure suivant l'une des revendications précédentes,
caractérisé en ce que
les éléments (LE1, LE2) sensibles à la lumière sont disposés perpendiculairement à l'axe (SA2) de symétrie des champs (SF1, SF2) de rayonnement.

21. Dispositif de mesure suivant l'une des revendications précédentes,
caractérisé en ce que
il est prévu un dispositif (JV) d'ajustement destiné à l'optimisation de l'association entre les éléments (LE1 à LE8) sensibles à la lumière et les champs (SF1 à SF4) de rayonnement associés.

22. Dispositif de mesure suivant l'une des revendications précédentes,
caractérisé en ce que
pour plus de deux guides d'ondes lumineuses, le nombre des éléments (LE1, LE2) sensibles à la lumière est choisi plus petit que le nombre des guides (LW1 à LW4) d'ondes lumineuses se trouvant l'un à côté de l'autre.

23. Dispositif de mesure suivant l'une des revendications 1 à 21,
caractérisé en ce que
le nombre des éléments (LE1 à LE4) sensibles à la lumière est choisi égal au nombre des guides (LW1 à LW4) d'ondes lumineuses se trouvant l'un à côté de l'autre.

24. Dispositif de mesure suivant l'une des revendications 1 à 21,
caractérisé en ce que
le nombre des éléments (LE1 à LE8) sensibles à la lumière est choisi plus grand que le nombre des guides (LW1 à LW4) d'ondes lumineuses se trouvant l'un à côté de l'autre, notamment au moins cinq fois et de préférence à peu près cent fois plus grand.

25. Dispositif de mesure suivant l'une des revendications précédentes,
caractérisé en ce que
il est prévu des écrans (BL1 à BL3) qui sont disposés de telle sorte qu'ils donnent un découplage de champs (SF1 à SF4) de rayonnement voisins.

26. Dispositif de mesure suivant la revendication 25,
caractérisé en ce que
il est prévu pour m éléments (LE1 à LEm) sensibles à la lumière m - 1 écrans (BL1 à BLm-1).

27. Dispositif de mesure suivant la revendication 25 ou 26,
caractérisé en ce que
les écrans (BL1 à BL3) sont disposés parallèlement au plan de symétrie (SA8) des champs (SF1 à SF4) de rayonnement.

28. Dispositif de mesure suivant l'une des revendications précédentes,
caractérisé en ce que
le dispositif (AE6) d'exploitation comporte des dispositifs pour le fonctionnement simultané en temps réel.

29. Dispositif de mesure suivant l'une des revendications précédentes,
caractérisé en ce que
il est prévu dans le dispositif (AE6) d'exploitation un dispositif (DAV) de lecture, qui échantillonne dans le temps les signaux (RS1 à RS4) de mesure enregistrés par les éléments (LE1 à LE4) sensibles à la lumière.

30. Dispositif de mesure suivant l'une des revendications précédentes,
caractérisé en ce que
il est prévu dans le dispositif d'exploitation une unité (CPU) de calcul à mémoire (MEM) de valeur de mesure et les signaux de mesure enregistrés par les éléments (LE1 à LE4) sensibles à la lumière peuvent être combinés l'un à l'autre de manière fonctionnelle de telle sorte que les grandeurs caractéristiques optiques associées puissent être exploitées de manière sélective pour chaque guide d'ondes lumineuses.

31. Dispositif de mesure suivant l'une des revendications précédentes,
caractérisé en ce que
le dispositif (ME1) de mesure fait partie d'un appareil à épissure pour guide d'ondes lumineuses.

32. Dispositif de mesure suivant la revendication 31,
caractérisé en ce que
il est prévu des moyens pour aligner les guides (LW1, LW2) d'ondes lumineuses se trouvant l'une à côté de l'autre au point (MSE1) de l'épissure.

33. Dispositif de mesure suivant la revendication 32,
caractérisé en ce que
les moyens (SG1, SG2) d'alignement des guides (LW1, LW2) d'ondes lumineuses se trouvant l'un à côté de l'autre au point (MSE1) de l'épissure peuvent être commandés séparément par des signaux d'exploitation du dispositif (AE1) d'exploitation.

34. Dispositif de mesure suivant l'une des revendications 1 à 30,
caractérisé en ce que
le dispositif (ME1) de mesure fait partie d'un appareil de mesure d'atténuation de guide d'ondes lumineuses.

35. Dispositif de mesure suivant l'une des revendications précédentes,
caractérisé en ce que
il est prévu entre des points de sortie des guides d'ondes lumineuses (par exemple LW1, LW2) et les éléments sensibles à la lumière (par exemple LE1, LE2) des moyens (par exemple MSV1, MSV2), qui provoquent un découplage accru de champs de rayonnement voisins (par exemple EF1, EF2).

36. Dispositif de mesure suivant l'une des revendications précédentes,
caractérisé en ce que
les champs de rayonnement (par exemple EF1, EF2) ont une étendue plus grande transversalement par rapport à la ligne de liaison des guides d'ondes lumineuses (par exemple LW1, LW2) que le long de cette ligne (VL) de liaison.

37. Dispositif de mesure suivant l'une des revendications précédentes,
caractérisé en ce que
il est prévu entre un point de sortie des champs de rayonnement (par exemple EF1, EF2) hors des guides d'ondes lumineuses (par exemple LW1, LW2) et les éléments sensibles à la lumière associés (par exemple LE1, LE2) des moyens (par exemple MSV1, MSV2), qui augmentent chacun l'étendue des champs de rayonnement (par exemple EF1, EF2) dans une direction (y) transversale à la ligne (VL) de liaison des guides d'ondes lumineuses (par exemple LW1, LW2).

38. Dispositif de mesure suivant la revendication 37,
caractérisé en ce que
il est procédé à l'élargissement dans la direction (y) transversale à la ligne (VL) de liaison des guides d'ondes lumineuses (par exemple LW1, LW2) d'au moins le facteur 2.

39. Dispositif de mesure suivant l'une des revendications précédentes,
caractérisé en ce que
il est prévu entre un point de sortie des guides d'ondes lumineuses (par exemple LW1, LW2) et les éléments sensibles à la lumière associés (par exemple LE1, LE2) des moyens (par exemple MSV1, MSV2) qui atténuent les champs de rayonnement (par exemple EF1, EF2) dans le domaine des éléments sensibles à la lumière (par exemple LE1, LE2) dans une direction (x) le long de la ligne (VL) de liaison des guides d'ondes lumineuses (par exemple LW1, LW2).

40. Dispositif de mesure suivant l'une des revendications précédentes,
caractérisé en ce que
des spots lumineux (par exemple LF1, LF2) formés chacun par les champs de rayonnement (par exemple EF1, EF2) dans le domaine des éléments sensibles à la lumière (par exemple LE1, LE2) sont plus grands dans la direction (y) transversale à la ligne (VL) de liaison des guides d'ondes lumineuses (par exemple LW1, LW2), notamment au moins deux fois aussi grands que dans la direction (x) de la ligne (VL) de liaison des guides d'ondes lumineuses (par exemple LW1, LW2).

41. Dispositif de mesure suivant l'une des revendications précédentes,
caractérisé en ce que
il est prévu entre un point de sortie des guides d'ondes lumineuses (par exemple LW1, LW2) et les éléments sensibles à la lumière (par exemple LE1, LE2) une optique de sortie (par exemple MSVG).

42. Dispositif de mesure suivant la revendication 41,
caractérisé en ce que
l'optique de sortie (par exemple MSVG) comprend un triplet dont l'aberration chromatique est corrigée.

43. Dispositif de mesure suivant l'une des revendications 41 ou 42,
caractérisé en ce que
l'optique de sortie (par exemple MSVG) est en flint lourd très réfringent ou en contient.

44. Dispositif de mesure suivant l'une des revendications 41 à 43,
caractérisé en ce que
l'optique de sortie (par exemple MSVG) est conçue pour un domaine angulaire d'au moins ± 20°, de préférence de ± 35° et d'au maximum ± 45°.

45. Dispositif de mesure suivant l'une des revendications 41 à 44,
caractérisé en ce que
l'optique de sortie (par exemple MSVG) a une ouverture plus grande transversalement à la ligne de liaison (VL) des guides d'ondes lumineuses (par exemple LE1, LE2) que le long de leur ligne (VL) de liaison.

46. Dispositif de mesure suivant l'une des revendications précédentes,
caractérisé en ce que
un spot lumineux (par exemple LF1, LF2) produit dans le domaine des éléments sensibles à la lumière (LE1, LE2) pour chaque champ de rayonnement (par exemple EF1, EF2) a à peu près une forme oblongue.

47. Dispositif de mesure suivant l'une des revendications 1 à 45,
caractérisé en ce que
un spot lumineux (par exemple LF1, LF2) produit dans la zone des éléments sensibles à la lumière (par exemple LE1, LE2) pour chaque champ de rayonnement (EF1, EF2) a une forme à peu près elliptique.

48. Dispositif de mesure suivant l'une des revendications précédentes,
caractérisé en ce que
l'étendue des champs de rayonnement (par exemple EF1, EF2) dans la direction (y) transversale à la ligne (VL) de liaison des guides d'ondes lumineuses (par exemple LW1, LW2) est choisie de telle sorte que l'étendue de leurs spots lumineux associés (par exemple LF1, LF2) correspondent à peu près à l'étendue des éléments sensibles à la lumière (LE1, LE2) dans cette direction (y).

49. Dispositif de mesure suivant l'une des revendications précédentes,
caractérisé en ce que
l'étendue des champs de rayonnement (par exemple EF1, EF2) dans la direction (x) de la ligne (VL) de liaison des guides d'ondes lumineuses (par exemple LW1, LW2) est choisie si petite que des spots lumineux (par exemple LF1, LF2) voisins dans le domaine des éléments récepteurs (par exemple LE1, LE2) ne se chevauchent pas ou se chevauchent le moins possible.

50. Dispositif de mesure suivant l'une des revendications précédentes,
caractérisé en ce que
il est prévu entre le point de sortie et les éléments sensibles à la lumière (par exemple LE1, LE2) un diaphragme (S1) à fente.

51. Dispositif de mesure suivant l'une des revendications précédentes,
caractérisé en ce que
il est prévu entre des points de sortie des guides d'ondes lumineuses (par exemple LW1, LW2) et les éléments sensibles à la lumière (par exemple LE1, LE2) des moyens de représentation optiques, dont la caractéristique de représentation est choisie de telle sorte que le découplage de champs de rayonnement voisins (par exemple EF1, EF2) soit amélioré.

52. Dispositif de mesure suivant la revendication 51,
caractérisé en ce que
la représentation des champs de rayonnement (par exemple EF1, EF2) est mise en oeuvre au moyen d'un hologramme, de telle sorte qu'il y ait une amélioration du découplage de champs de rayonnement voisins (par exemple EF1, EF2) dans le domaine des éléments sensibles à la lumière (par exemple LE1, LE2).

53. Dispositif de mesure suivant la revendication 51,
caractérisé en ce que
la représentation des champs de rayonnement (par exemple EF1, EF2) est effectuée au moyen d'une cellule de Bragg, de telle sorte qu'il y ait une amélioration du découplage de champs de rayonnement voisins (par exemple EF1, EF2) dans le domaine des éléments sensibles à la lumière (LE1, LE2).

54. Dispositif de mesure de plusieurs guides d'ondes lumineuses, notamment suivant l'une des revendications précédentes, comportant un récepteur optique (OR1), qui comporte un dispositif (KR1) de couplage formé de telle sorte qu'au moins deux guides (LW1, LW2) d'ondes lumineuses soient insérés l'un à côté de l'autre dans une structure ordonnée, si bien qu'ils ont des champs (SF1, SF2) de rayonnement indépendants se trouvant l'un à côté de l'autre, le récepteur optique (OR7) étant formé de telle sorte qu'au moins un élément (par exemple LE1) sensible à la lumière soit disposé avec possibilité de décalage par rapport aux guides d'ondes lumineuses à mesurer (par exemple LW1, LW2) en face de ceux-ci transversalement par rapport à la direction de propagation des champs de rayonnement (par exemple EF1, EF2) et dans ces champs (SF1, SF2) de rayonnement de signaux d'émission à sortir ou dans un groupe de ces champs de rayonnement (SF1/SF2, SF3/SF4), et comportant un dispositif (AE1) d'exploitation, qui est associé au récepteur optique (OR1) et dans lequel les signaux (RS1, RS2) de mesure reçus par l'élément sensible à la lumière (LE1) des divers champs (SF1, SF2) de rayonnement peuvent être exploités séparément.

55. Procédé de mesure de plusieurs guides d'ondes lumineuses, notamment suivant l'une des revendications précédentes, comportant un récepteur optique (OR1), qui comporte un dispositif (KR1) de couplage formé de telle sorte qu'au moins deux guides (LW1, LW2) d'ondes lumineuses puissent être insérés l'un à côté de l'autre dans une structure ordonnée, si bien qu'ils ont des champs (SF1, SF2) de rayonnement se trouvant l'un à côté de l'autre et indépendants, le récepteur optique (OR7) étant formé de telle sorte que son dispositif (KR7) de couplage comportant les guides d'ondes lumineuses à mesurer (LWI, LW2) soit disposé de manière à pouvoir être décalé par rapport à au moins un élément sensible à la lumière (par exemple LE1), en face de celui-ci transversalement à la direction de propagation des champs de rayonnement (par exemple EF1, EF2), de sorte qu'au moins un élément sensible à la lumière (par exemple LE1) soit associé à ces champs (SF1, SF2) de rayonnement de signaux d'émission à sortir ou à un groupe de ces champs de rayonnement (SF1/SF2, SF3/SF4), et comportant un dispositif (AE1) d'exploitation, qui est associé au récepteur optique (OR1) et dans lequel les signaux (RS1, RS2) de mesure reçus par l'élément sensible à la lumière (par exemple LE1) des divers champs (SF1, SF2) de rayonnement peuvent être exploités séparément.

56. Procédé de mesure, dans lequel on insère au moins deux guides (LW1, LW2) d'ondes lumineuses dans un dispositif (KR1) de couplage d'un récepteur optique (OR1) dans une structure ordonnée l'un à côté de l'autre, de sorte à former des champs (SF1, SF2) de rayonnement l'un à côté de l'autre et indépendants, dans lequel on prévoit dans chacun de ces champs (SF1, SF2) de rayonnement de signaux d'émission à sortir ou dans un groupe de ces champs de rayonnement (SF1/SF2, SF3/SF4) au moins un élément (LE1, LE2) sensible à la lumière, dans lequel on oriente ces au moins deux éléments sensibles à la lumière (LE1, LE2) en ce qui concerne leurs caractéristiques de réception par rapport aux champs (SF1, SF2) de rayonnement de sorte à détecter par ces au moins deux éléments sensibles à la lumière (LE1, LE2) des parties différentes desdits champs de rayonnement, et dans lequel on reçoit par les éléments sensibles à la lumière (LE1, LE2) des signaux (RS1, RS2) sélectifs de mesure, qui correspondent aux champs respectifs de rayonnement (SF1, SF2) et on les exploite ensuite séparément.

57. Procédé suivant la revendication 56,
caractérisé en ce que
on lit les signaux (RS1 à RS4) de mesure, reçus par les divers éléments sensibles à la lumière (LE1 à LE4), des divers champs (SF1 à SF4) de rayonnement l'un après l'autre de manière séquentielle en fonctionnement à multiplexage temporel et on les mémorise ensuite en tant que signaux de mesure.

58. Procédé suivant l'une des revendications précédentes,
caractérisé en ce que
on forme une image des champs de rayonnement (par exemple EF1, EF2) avec découplage mutuel agrandi sur les éléments sensibles à la lumière (par exemple LE1, LE2).
